(19) Europäisches Patentamt
European Patent Office
Office européen des brevets

(11) Publication number: 0 169 928
A1

(12) # EUROPEAN PATENT APPLICATION

(21) Application number: 84109190.3

(22) Date of filing: 02.08.84

(51) Int. Cl.⁴: G 11 B 5/66
G 11 B 5/64

(43) Date of publication of application:
05.02.86 Bulletin 86/6

(84) Designated Contracting States:
DE FR GB NL

(71) Applicant: KONISHIROKU PHOTO INDUSTRY CO. LTD.
No. 26-2, Nishishinjuku 1-chome Shinjuku-ku
Tokyo 160(JP)

(72) Inventor: Ishibasi, Shozo
432-7-1, Terada-cho
Hachioji-shi Tokyo(JP)

(72) Inventor: Kasanuki, Yuji
2-5-19, Owada-cho
Hachioji-shi Tokyo, 192(JP)

(72) Inventor: Naoe, Masahiko
1-36-10, Kitasenzoku
Ota-ku Tokyo(JP)

(74) Representative: Henkel, Feiler, Hänzel & Partner
Möhlstrasse 37
D-8000 München 80(DE)

(54) **Magnetic recording medium.**

(57) A magnetic recording medium comprising a high magnetic permeability material layer and a magnetic layer, the magnetic layer

(a) being continuous magnetic layer made mainly from iron oxides, and

(b) having not less than 0.5 of ratio between perpendicular-to-plane residual magnetization and in-plane residual magnetization: $M_V/M_H$.

EP 0 169 928 A1

0169928

# S P E C I F I C A T I O N

## BACKGROEND OF THE INVENTION

### Title of the invention

Magnetic recording medium

### Field of the invention

This invention relates to a magnetic recording media such as the magnetic tape and the disk.

### Description of the prior art

So far magnetic recording media are extensively used in recording various (video, audio and digital) electrical signals. They have been developed to be used in recording process by which magnetization were brought longitudinally in the plane of the magnetic layer formed over a substrate. Increasingly higher density of magnetic recording in more recent years requires shorter and shorter wavelength of record signal, which caused increase in diamagnetic field in the medium, resulting in decline and rotation of residual magnetization and in turn in remarkably reduced output of reproduction. This makes it very difficult to apply record-wavelength of not more than submicron order.

On the other hand, recently proposed perpendicular magnetization recording process by which magnetization is brought perpendicularly to the magnetic layer plane of a magnetic recording medium, for example, as presented in Nikkey Electronics (JPN) No. 192: Aug. 7, 1978. It has advantageous characteristic at higher density that the shorter the record wavelength, the diamagnetic field acting the residual magnetization in the medium gets lower, thus leading us to an inference that it is intrinsically preferred to the use in high density recording.

It is essential for high efficient accomplishment of perpendicular recording like this that the recording layer of the magnetic recording medium should have perpendicular anisotropy of magnetization or magnetizable thorugh the thickness. For example are known magnetic recording media with a magnetic layer formed by applying mixture mainly of magnetic powder with binder so as to have magnetization anisotropy orientated perpendicularly to the plane of the magnetic layer. Typical magnetic powders suitable for use in recording media of this kind are Co, $Fe_3O_4$, $\gamma$-$Fe_2O_3$, Co-added $Fe_3O_4$, Co-added $\gamma$-$Fe_2O_3$, hexagonal system ferrite, such as barium ferrite, Mn-Bi (Japanese Laid-open Patent Application Nos. 46803/1977, 67406/1978, 86103/1980, 78403/1977 and 87202/1979). These painted media, however, contains non-magnetic binder in the magnetic layer, limiting increase in filling density of magnetic powder, and so cannot permit

enough increase in S/N ratio. They have additional disadvantage, for instance, dependence of the dimentions of the recorded signal on the size of the magnetic particle, and thus can be concluded to be inadequate for perpendicular magnetization recording.

Under the circumstance, attention is drawn, as suitable for use in high density recording, to a continuous thin film magnetic recording medium comprising a substrate and such as a perpendicularly magnetizable magnetic layer formed by continuous coating of magnetic material without utilizing a binder.

The continuous thin film recording medium suitable for use in perpendicular magnetization recording, for instance as disclosed in Japanese Patent Publication No. 17282/1982 comprises a magnetic recording layer of a Co-Cr alloy film. It describes that films of Co-Cr alloys containing Cr in 5 to 25 % by weight are specially superior. Another magnetic recording medium having a Co-Cr alloy film and a magnetic layer containing rhodium not more than 30 % by weight was disclosed in Japanese Laid-open Patent Application No. 111110/1980. Further magnetic recording media were known which has either a film of cobalt-vanadium alloy (for example, "Transaction on Magnetism" of IEEE (USA) 18(6): 1116, 1982, or a film of cobalt-ruthenium alloy, for example, described in the reports on perpendicular magnetization recording at the

18th Symposium Of Communication Institute, Tohhoku University.

On the other hand, for instance, Japanese Laid-open Patent Application No. 51804/79 disclosed the provision with a Fe-Ni priming layer magnetically-soft or of low coercive force between Co-Cr perpendicularly magnetizable film and substrate, whereby the magnetic flux from the supplementary magnetic poles can be converged on the main opposed magnetic poles and another expectable effect is smaller demagnetization on the residual magnetization state after recording has been made.

The investigation by the inventors demonstrated that the magnetic recording medium having the above-mentioned structure is inadequate for practical use because of the following disadvantages involving its structural component consisting of the Co-Cr perpendicularly magnetizable film:

(1) For the orientation of magnetization anisotropy perpendicularly to the magnetic layer plane, it is particularly necessary to form a magnetic layer at high vacuum of $10^{-7}$ or smaller Torr, and to meet the conditions such as high-technical cleaning treatment of substrates and low sputtering speed. These makes controlling factors for accomplishing perpendicular orientation extremely complicated.

(2) During recording and reproduction of signals, inevitably relative sliding of magnetic recording medium to perpendicular recording and reproduction head is associated with bad interface, so that the medium and head are liable to flaws and damage.

(3) The hard magnetic layer is liable to cracks, if it is formed over a flexible substrate.

(4) Because of insufficient errosion-proofness for use in the magnetic recording medium, it is necessary to provided over the surface with protective coating.

(5) Raw material, cobalt is available with instability and at high costs.

## OBJECT AND SUMMARY OF THE INVENTION

It is an object of the invention is to provide a magnetic recording medium perpendicularly magnetizable at high densities, superior in mechanical strength and chemical stability and good in recording/reproduction sensitibity.

Magnetic recording medium according to the invention is characterised in comprising a high magnetic permeability material layer and a magnetic layer, the magnetic layer

(a) being a continuous magnetic layer made mainly from iron oxides, and

(b) having not less than 0.5 of ratio between perpendicular-to-plane residual magnetization and in-plane residual magnetization: $M_V/M_H$.

In the embodiment of the invention, the magnetic layer

consists mainly from iron oxides and hence has good inherent properties owing to the oxides: mechanical strength, chemical stability and others. Thus no surface-protective coating is necessary though the prior art thin alloy film needs it. This permits smaller spacing between the magnetic head and the medium, associated with higher density recording and reduced cost of material.

In addition, the ratio between in-plane and perpendicular-to-plane residual magnetization, $M_V/M_H$, of the magnetic layer consisting mainly from iron oxides is not less than 0.5, under which satisfactorily magnetizable structure is established, with the magnetic moment of the magnetic material of iron oxides inclined up at angles of 30 degrees or more to the in-plane. The magnetizations $M_V$ and $M_H$ can be measured, for example, with a vibrating sample magnetometer ( Tohei Industry Co., Ltd., Japan). Under the condition of $M_V/M_H < 0.5$, it is difficult to obtain magnetic moment serving for perpendicular magnetization.

The magnetic recording medium according to the invention, which is, in contrast to those with the magnetic iron oxide layer alone, featured by the additionally-provided layer of high magnetic permeability material permits converged magnetic flux at recording and smaller post-recording demagnetization, contributing to improvement in recording retentivity. That is to say, the high magnetic permeability material layer through which magnetic flux from the magnetic poles passes without difficulty has an effect of converting the magnetic flux on the magnetic layer, and another effect to satisfactorily maintain residual magnetization by the later-described magnetic recycling effect, without diminishing recording density and with improvement in sensitibity of recording/reproduction.

## BRIEF DESCRIPTION OF THE DRAWINGS

Other features and advantages of the invention will be apparent from the following description taken in connection with the accompanying drawings wherein:

Fig. 1 is a cross-sectional view of a magnetic recording medium according to the invention;

Fig. 2 is a sectional view of an opposed targets sputtering apparatus illustrated schematically;

Fig. 3 is the graph representing the intrinsic hysteresis loop of the magnetic recording medium;

Fig. 4a is a diagram illustrating schematically magnetic recording;

Fig. 4b is a diagram illustrating the magnetized state of the same medium;

Fig. 5 is the graph showing in comparison reproduction characteristics of magnetic recording media;

Fig. 6 is the characteristic curves of reproduction of

the magnetic recording medium with time;

Fig. 7 is the graph showing change rate in residual magnetic flux density of the magnetic recording medium with time;

Fig. 8 is a cross-sectional view of a modified magnetic recording medium according to the invention;

Fig. 9 is the graph showing in comparison perpendicular orientations and the corresponding perpendicular magnetization ratios of the various magnetic recording media;

Fig. 10 is a cross-sectional view of another modified magnetic recording medium;

Fig. 11 is the graph representing in comparison the variation in perpendicular magnetization ratio with sample;

Fig. 12a is a diagram illustrating schematically magnetic recording on the medium of Fig. 8;

Fig. 12b is a diagram illustrating the magnetized state of the same medium;

Fig. 13 is a fragmentary perspective view of a prior art photomemory medium illustrated to an enlarged scale;

Fig. 14 is a fragmentary perspective view of another prior art photomemory medium illustrated to an enlarged scale;

Fig. 15 is a fragmentary perspective view of the same medium but tracking guides formed thereon illustrated similarly to Fig. 14;

Figs. 16a, b and d are fragmentary cross-sectional views of media according to the invention with different tracking

guides formed thereon illustrated to an enlarged scale;

Figs 17a, b and c are fragmentary cross-sectional views at the series of processing stages of forming tracking guides, and illustrated to an enlarged scale;

Fig. 18 is a sectional view of a photomagnetic memory arrangement illustrated schematically;

Figs. 19a, b, c and d are fragmentary cross-sectional views of media with different tracking guides formed thereon illustrated to an enlarged scale;

Figs. 20a, b and c are plan views of various tracking guides;

Fig. 21 is the graph showing in comparison reflectivity;

Fig. 22 is a cross-sectional view of a further modified magnetic recording medium;

Fig. 23 is the graph representing the dependence of perpendicular magnetization ratio of the magnetic layer on reflection peak (strength, Kcount/sec) from [111] plane of the priming layer;

Fig. 24 is the graph representing change in perpendicular magnetization depending on either with or without non-crystalline priming layer;

Fig. 25 is a cross-sectional view of a further modified magnetic recording medium;

Fig. 26a is an enlarged cross-sectional view of the priming;

Fig. 26b is a cross-sectional view of the medium with a mgnetic layer formed on the priming illustrated to an enlarged scale;

Fig. 26c is a plan view of one in illustrated Fig. 26a;

Figs. 27a and c are enlarged cross-sectional views of other primings;

Figs. 27b and d are plan views of those illustrated in Figs. 27b and d;

Fig. 28a is an enlarged cross-sectional view of a further; and

Fig. 28b is a plan view of one illustrated in Fig. 28a.

## DESCRIPTION OF THE PREFERRED ENBODIMENTS

The invention will be described more fully by examples with reference to the accompanying drawings hereinafter:

A magnetic recording medium comprises, for instance, the following layers:

A magnetic layer, in contrast to prior art painted magnetic layer, is a continuous iron oxide film containing no binder, and having a great saturated magnetization and a coercive force of 100 to 5000 Oe. The term "iron oxide" refers such as to $Fe_3O_4$, $\gamma$-$Fe_2O_3$ or Berthollide compounds between these, having non-stoichiometric composition. The magnetic layer is advantageous to contain iron oxides at not less than 50 %, preferably 70 %, by weight in total content of iron and

oxygen, and to have 1 to 3, preferably 4/3 to 2, of composition ratio between oxygen and iron atoms. Compounds suitable for use in the component are the iron oxides above-mentioned. Any iron oxide component of spinel crystal structure, in particular, for example, [100] plane (for $Fe_3O_4$) or [100] plane (for $\gamma$-$Fe_2O_3$) is preferred perpendicular to the in-plane, is associated with great saturated magnetization and high residual magnetic flux density, reflecting a very good sensitibity of reproduction. Typical iron oxides exhibiting magnetism are $\alpha$-$Fe_2O_3$ being parasitic ferromagnetic and rhombohedral $Fe_3O_4$, $\gamma$-$Fe_2O_3$, and Berthollide compounds of them, which being of spinel crystal structure and having ferrimagnetism, Ba-, St-, Pb-ferrites and their derivatives, which are iron oxides of hexagonal system, and garnet structure ferrites of rare earth. Values of saturated magnetization, one important magnetic property, are as follows: for example, $\alpha$-$Fe_2O_3$: 2.0 Gausses, Ba-, St- and Pb ferrites: not more than 380 Gausses, and garnet structure ferrite: not more than 140 Gausses. In contrast to these, spinel structure ferrite suitable for use in embodiments according to the invention, exhibits a higher saturated magnetization as high as 480 Gausses than any iron oxide. High saturated magnetization like this causes residual magnetic flux density to be sufficiently high, and hence is greatly effective to reproduce stored signals at good sensitibity. On the other hand, Ba- and Sr-ferrites

which exhibits saturation magnetic-flux density similar to those of spinel structure ferrites could be used for forming continuous thin magnetic layer, for instance, with a later-described sputtering apparatus only at maintenance temperature of substrate as high as 500°C. This reflects narrower selection of substrate material to be used, (for example, plastic substrates with poor heat resistance can not be used) and so on. They are thus problematic and unsuitable from the viewpoint of manufacture. Spinel structure iron oxides suitable for use in embodiments according to the invention can be prossesed into film at relatively low temperture region between room temperature and 300°C, thus permitting generous selection of substrate material. The magnetic layer however can contains minor constituents or additives, which are such as metallic and nonmetallic elements other than iron and oxygen, metal oxides, semimetals and their compounds, and compounds of nonmetals. These contributes to improvements in magnetic properties such as coercive force, saturated magnetization, and residual magnetization, in their crystallizability, and in anisotropy of crystals. Elements and compounds suitable to be added for attaining the improvements are such as Al, Co, Co-Mn, Zn, Co-Zn, Li, Cr, Ti, Li-Cr, Mg, Mg-Ni, Mn-Zn, Ni, Ni-Al, Ni-Zn, Cu, Cu-Mn, Cu-Zn, V, etc.

In addition, the above-described high magnetic permeability material layer is provided commonly between the magnetic layer and the substrate or insteadly a substrate of a high magnetic permeability can be used. It is desirable high magnetic permeability material layer that permits magnetic flux to pass through it, in particular, has a mgnetic permeability $\mu_i$ of $10^2$ or more, preferably not less 2000, and a $H_c$ especially of not more than 10 Oe, such as 1 Oe, and is magnetizable in the in-plane of the magnetic layer. Suitable high magnetic permeability material are magnetically soft material such as pure iron, silicon steel, Permalloy, Supermalloy, Cu-Zn ferrite, Ni-Zn ferrite, Mn-Zn ferrite, Sendust, Mumetal, etc., which are all crystalline; and Fe-Co, Co-Zr, alloys of Co with such as Ti, Y, Hf, Nb, Ta or W, and alloys of transition metals such as Fe, Co and Ni with semimetals such as Si, B, P and C, which are all non-crystalline. The thickness of the high magnetic permeability material layer should be in the range of 0.05 to 5 μm, preferably 0.1 to 3 μm. Too small thickness of less than 0.05 μm takes so poor effect whereas excessive thickness over 5 μm causes not much improvement in reproduction output because of saturated effect.

Any substance to which a concerned magnetic material can be adhesive is suitable for use in preparing the substrate of the magnetic recording medium. Typical examples exhibiting desirable surface smoothness are of plastics such

as polyethylene terephthalate, polyvinyl chloride, cellulose triacetate, polycarbonate, polyimide, polyamide and polymethylmethacrylate; ceramics including glass; and metals. The substrate may be used in the form of sheet, card, disk, drum or long tape.

The magnetic recording medium according to the invention can be prepared as follows: With a substrate attached closely to a fixed plate or moving, a magnetic material is deposited over the substrate. For accomplishing this, in a vacuum processing chamber to which an evacuation system comprising a vacuum pump is connected, sputtering method in which targets of magnetic material are sputtered or vacuum evaporation coating method in which high magnetic permeability material and magnetic material are evaporated from their sources and then depositted on the substrate is applicable. In any case, elements to be constituents of the high magnetic permerability material layer and the magnetic layer are caused to fly and is depositted onto the substrate to form continuous thin film on it.

Fig. 1 shows a preferred embodiment of magnetic recording mediun according to the invention in cross-sectional view, comprising in lamination from bottom to top a substrate 6, a magnetically soft layer 11 of Permalloy and about 1 μm thick and a perpendicularlly magnetizable iron oxide film 10 of about 1 μm thick.

In the embodiment of the invention, the magnetizable film 10 consists mainly from iron oxides and hence has good inherent properties owing to the oxides: mechanical strength, chemical stability and others. Thus no surface-protective coating is necessary though the prior art thin film needs it. This permits smaller spacing between the magnetic head and the medium, associated with higher density recording and reduced cost of material.

In addition, the ratio between in-plane and perpendicular-to-plane residual magnetization, $M_V/M_H$, of the magnetizable film10 consisting mainly from iron oxides is not less than 0.5, under which satisfactorily magnetizable structure is established, with the magnetic moment of the magnetic material of iron oxides inclined up at angles of 30 degrees or more to the in-plane. The magnetizations $M_V$ and $M_H$ can be measured, for example, with a vibrating sample magnetometer (Tohei Industry Co., Ltd., Japan). Under the condition of $M_V/M_H < 0.5$, it is difficult to obtain magnetic moment serving for perpendicular magnetization.

The magnetic recording medium according to the invention, which is, in contrast to those with the magnetic iron oxide layer alone, featured by not only the above-mentioned iron oxide magnetizable film 10 but also additionally-provided magnetically soft layer 11 of high magnetic permeability permits converged magnetic flux at recording and smaller

post-recording demagnetization, contributing to improvement in recording retentivity. That is to say, the high magnetic permeability material layer through which magnetic flux from the magnetic poles passes without difficulty has an effect of converting the magnetic flux on the magnetic layer, and another effect to satisfactorily maintain residual magnetization by the later-described magnetic recycling effect, without diminishing recording density and with improvement in sensitivity of recording/reproduction. The magnetically soft layer 11 may be formed by known sputtering or vacuum evaporation coating technique (evapolation rate: 100 Å/sec, electron beam heating), of which description is omitted.

The perpendicularly-magnetizable film or magnetic material 10 is formed on a substrate by means of vacuum evaporation coating technique including electric field evaporation coating and ion plating techniques, sputtering method, and others consisting of flying atoms to be constituents of the magnetic layer. Especially the use of an opposed-targets sputtering apparatus is preferred.

Fig. 2 shows an opposed targets sputtering apparatus. In Fig. 1, reference characters designate as follows: 1 vacuum chamber, 2 evacuation system comprising a vacuum pump for evacuating the vacuum chamber, and 3 gas introducing system for introducing a specified gas in the chamber 1 to gas pressure of the region between $10^{-1}$ and $10^{-4}$ Torr. There

is provided a pair of targets $T_1$ and $T_2$ disposed opposite and parallel to each other, each attached to a target holder 4. Between the targets, a magnetic field is established by magnetic field generating means (not shown). There is provided a substrate 6 of a magnetic film to be prepared. It is secured to a substrate holder 5 to be positioned vertically to and on the side of the opposed targets.

In the targets sputtering apparatus of the above-described construction, magnetic field is established between and perpendicularly to both targets $T_1$, $T_2$ disposed parallel and opositely to each other. Sputter gas ions are accerelated in electric field in the cathode drop area, (namely, the atmosphere of plasma generated between the targets $T_1$, $T_2$ and the space between the targets $T_1$, $T_2$), and bomberds against the surfaces of the targets. The thus-released γ-electrons are enclosed in the space between the targets under the action of the magnetic field and therein moved towards either opposed target. Upon they reaching the surface of either target, they are reflected at the cathode drop area near the target. In this way, γ-electrons repeats the reciprocating movement in the enclosure of magnetic field. During the repeated reciprocations, they collide with neutral atmospheric gas to decompose the latter into ions and electrons. The products promotes the release of γ-electrons from the targets and ionization of atmosphere gas. Consequently

high density plasma is generated in the space between the targets $T_1$, $T_2$. As the result, target substances are sputtered as a magnetic layer or film on the substrate 6. Compared with other deposition methods, the opposed targets sputtering apparatus is advantageous for preparing a perpendicular magnetization film in respects that it permits rapid film coating by high speed sputtering without needing direct exposure to the plasma, and at low substrate temperature. It has additional advantages compared with the prior art sputtering apparatus that target substances are sputtered on the substrate with small incidence energy and hence simply guided to be deposited in desired direction. It therefore permits ready forming of a film having a structure appropriate for perpendicular magnetization recording.

The preparation of the magnetic record medium with the above-mentioned sputtering apparatus is described under by way of an example:

The conditions for the preparation were as follows:

Target material: Iron (containing Co at 1 atomic %)

Substrate: Glass

Distance between targets: 100 mm

Magnetic field of the sputtering space: 100 Oe

Shape of target: Disk of 100 mm in diameter and 5 mm thick

Spacing between substrate and target end: 30 mm

Back pressure in vacuum chamber: $10^{-6}$ Torr

Pressure of introduced gas: 4 x $10^{-3}$ Torr

Sputtering input power: 420 W

Thus, a mgnetic recording medium consisting of a base film 6 and an iron oxide magnetic layer 10 on it, as shown in Fig. 1, was obtained. The midium was used for assessment of the characteristics of the formed magnetic layer. The assessment was made on the basis of the determination of composition by X-ray microanalysis (XMA), state of iron oxide by X-ray diffraction, and magnetic characteristics with a vibrating sample magnetometer. The yielded results of characteristics of the magnetic recording medium were as follows:

The ratio between in-plane residual magnetization, $M_H$, and perpendicular-to-plane residual magnetizaiton, $M_V$,: $M_V/M_H$ was 0.5. Fig. 3 shows the obtained hysteresis loops represented by broken and solid lines when magnetization was carried out in derections of and perpendicularly to the in-plane, respectively. The residual magnetizations when applied magnetic field is zero are referred to as $M_H$ and $M_V$, respectively. As apparent from the figures, the hysteresis loop by perpendicular magnetization is smaller than that by in-plane magnetization: $M_V \geq 0.5\ M_H$, demonstrating the formation of appropriate mgnetic layer for perpendicular magnetization. This is to be surprised for the iron oxide magnetic layer.

Besides, the composition of the magnetic recording medium determined with a X-ray micro analyser (XMA), [X-556]

KEVEX-7000 model (Hitachi Ltd., Japan) has a main peak of Fe and shows a small content of Co. The results obtained with a X-ray diffractometer having a Cu Kα tube, Model: JDX-10 RA (Nippon Electron, Japan) are summarized in the under-given Table, showing that the principal constituents are iron oxides. The observation with an electron microscope revealed that the magnetic layer had oderly perpendicularly-arrayed structure to the in-plane.

| Reflection angle 2θ (deg.) | Miller indices $Fe_3O_4$ | Miller indices γ-$Fe_2O_3$ | Observed reflectivity (%) |
|---|---|---|---|
| 17.9 | (111) | | 64 |
| 21.8 | | (200) (006) | 100 |
| 25.6 | | (204) | 59 |
| 31.3 | | (222) | 44 |
| 35.3 | (311) | | 53 |
| 37.2 | | (226) | 35 |
| 42.7 | (400) | | 53 |

Before film forming by the above-mentioned sputtering process, the surface of the substrate should be subjected to cleaning treatment by bomberdment of $Ar^+$ in the same sputtering apparatus, baking, or high frequency treatment.

The magnetic recording medium obtained in the above-described way has important features: for one thing, the

magnetic layer 10 is magnetizable substantially perpendicularly to the in-plane, and for another thing, a magnetically soft layer 11 of a high magnetic permeability is provided under the magnetic layer 10.

Fig. 4a illustrating the mode of magnetic recording, in which a reference character 12 designates a supplementary magnetic pole, of which excitation was provoked by a recording signal to establish a magnetic field 13 affecting the medium. In the magnetically soft layer 11, magnetic flux 15 is converged to the main magnetic pole 14 while magnetic recording correspondent to the main magnetic pole 14 is made in the magnetic layer 10. Thus, more convergence of magnetic flux from the supplementary pole to the main magnetic pole is obtained, enabling high sensitibity magnetization by perpendicular magnetic flux. Fig. 4b showing post-recording magnetized state, in which the magnetically soft layer 11 permits magnetic flux 18 to passes from one recording site 16 to another 17 of the magnetic layer 10 through the layer 11. The magnetic recycling effect (horseshoe-shaped magnetization mode) keeps magnetization, with the effect of reducing demagnetization. This contributes to stable and high level reproduction output based on the perpendicular magnetization recording.

In Fig. 5, curves a and b represent the plots of reproduction output based on the experimental data with magnetic

recording medium according to the invention comprising a magnetically soft between a substrate and a magnetizable film and another similar medium comprising a substrate and a magnetizable film superposed directly on it without magnetically soft layer between them. With the magnetic recording medium according to the invention, as the graph indicates, recording of good frequency characteristic could be accomplished at high density and high output. On the contrary, the absence of magnetically soft layer reflected inferior characteristic. For recording/reproduction was used a ring head of 0.3 μm in effective head gap and 100 μm in track width.

As an additional feature of the magnetic recording medium according to the invention, extremely smaller chamge in reproduction output with time was observed. In Fig. 6, characteristic curve a of the magnetic recording medium according to the invention exhibits stable high output against the period of deteriolation experiment. On the other hand, without magnetically soft layer, curve b indicating time course of lower output was obtained. In the forced deterioration experiments, outputs were measured with a medium of a magnetic layer of 5000 Å in thickness, and 30 Kbits/inch in recording density, under the conditions (80°C, relative humidity: 85 %). Recording/reproduction of the medium was made with a ring head of 0.4 μm in effective gap and 100 μm in track width.

The magnetic recording medium according to the invention, which has a magnetic layer made mainly from iron oxide, is markedly superior in chemical and mechanical stability to the prior art Co-Cr magnetic layer. Fig. 7 shows the result of the same forced deterioration experiments as abovementioned: curves a, c and d of residual magnetic flux density (Br) against time, for media with iron oxide magnetic layer according to the invention, with known Co-Cr magnetic layer, and with Tb-Fe magnetic layer, respectively. Measurement was carried out with a vibrating sample magnetometer (Tohei Industry Co., Ltd., Japan). ΔBr represents variance in residual magnetic flux density. The graph indicates that iron oxide magnetic layer undergoes much smaller deterioration in Br than Co-Cr magnetic layer, and magnetism declines to only a little in about 5 days in the Tb-Fe magnetic layer. Somewhat drop in ΔBr/Br for iron oxide magnetic layer is seemed to be due to conversion of a part of $Fe_3O_4$, main constituent of the film, into $\gamma$-$Fe_2O_3$. On the 30th day, spots, clouds and rust were observed on the surface of the Co-Cr magnetic layer whereas the surface of the iron magnetic layer was not changed at all.

Fig. 8 illustrates another magnetic recording medium embodying the invention comprising in lamination from bottom to top a substrate 6 as of polyimde, a magnetically soft layer 11 of Permalloy and anout 0.1 μm in thickness, a non-

magnetic layer 12 of Al and about 1000 Å thick, and a perpendicularly magnetizable film 10 of iron oxides and about 1 μm in thickness.

Instead of that the nonmagnetic layer 12 is provided on the substrate for the improvement in the orientation of the perpendicularly magnetizable film (magnetic layer) 10, it may be permitted to use a substrate made of nonmagnetic material. Suitable nonmagnetic material for use in this is organic high molecular compounds such as polyethylene terephtharate, polyimide and polyamide; metals amd nonmetals such as C, Mg, Al, Be, Si, Ti, V, Cr, Mn, Cu, Zn, Ga, Ge, As, Se, Rb, Zr, Nb, Mo, Ag, Cd, In, Sn, Ir, Sb, Pb, Te, Ta, W, Rh, Au, etc,; and their compounds, especially oxides. The thickness of the nonmagnetic layer is suitable to be 100 Å to 5 μm, preferably 0.03 μm to 2 μm. At thicknesses of less than 100 Å, continuous magnetic layer can be formed with difficulty. Thicknesses exceeding 5 μm takes in sufficient effects (magnetic flux converging effect and prevention from demagnetization) of the magnetically soft layer 11 provided on the priming layer.

In this embodiment, it is of importance to provide a magnetizable film 10 as the top layer, of the structure consisting of crystals growing through less influence of the priming layer and to obtain a desired perpendiculaly-magnetizable characteristic. For example, a nonmagnetic layer 12

is superposed on the magnetically soft layer 11, and, as top layer, a magnetizable film 10 is provided, whereby, independently of crystals in the magnetically soft layer as the result of intervention by the magnetic layer 12, the magnetizable film 10 can be formed by the development always with crystal axes orientated in desired direction. On the other hand, likwise in the structure where a magnetically soft layer 11 is provided the nonmagnetic layer 12, on the former being superposed, the intervention of the nonmagnetic layer 12 ensures the formation of the magnetically soft layer 11 well-crystallized, reflecting development of the magnetizable layer 10 derectly superposed on the magnetically soft layer 11 in the proper direction. Thus satisfactory perpendicularly magnetizaiton characteristic is achieved.

The nonmagnetic layer 12 may be formed by known vacuum evaporation coating method (evaporation rate: 60 Å/sec, electron beam heating) not described in particular. The magnetic layer 12, such as of polyimide, can be formed to a thickness of 2000 Å by spraying or spinning coating.

Fig. 9 shows comprison of the perpendicular magnetization, as measured with a vibrating sample magnetometer, and [111] face diffractive reflectivity, as measured with a Cu Kα tube, of the magnetic layer of $Fe_3O_4$ between the magnetic recording medium with a nonmagnetic layer 12 of Al or polyimide illustrated in Fig. 8 and the similar medium without

nonmagnetic layer. As it makes apparent, the presence of the nonmagnetic layer 12 causes an improvement in perpendicular magnetization charateristic and hence in perpendicular orientation of the magnetic layer.

Besides the characteristic curve of perpendicular magnetization represented by the solid line in Fig. 9 is from the data of the structure shown in Fig. 8, in which nonmagnetic layer 12 is superposed on the magnetically soft layer. As understood, the influence of the construction of crystals in the magnetically soft layer 11 is effectively intervened by the nonmagnetic layer 12. Likewise the structure shown in Fig. 10, in which the magnetically soft layer 11 is superposed on the nonmagnetic layer 12 and, as top layer, a magnetic layer is provided, is confirmed to exhibit improved perpendicular magnetization characteristic represented by the dash-and-dot line because magnetically-soft layer 11 of better crystal structure can be formed on the nonmagnetic layer 12 well-crystallized, resulting in the development of the magnetic layer 10 composed of good orientated crystals on the magnetically soft layer 11.

Seven kinds media of the structure illustrated in Fig. 10 were prepared by forming a carbon layer of 0.2 μm thick as the nonmagnetic layer 12 according to vacuum evaporation coating method and a Fe-B amorphous alloy layer of 0.5 μm as the magnetically soft layer 11 according to sputtering

method. Seven other similar media but without carbon layer 12 were prepared for comparison, and the characteristic curves are plotted in Fig. 11. As apparent from these, the absence of the carbon layer 12 layer is associated with great dispersion of perpendicular magnetization characteristic with sample whereas media according to the invention exhibits high perpendicular magnetic susceptibility at minor dispersion with sample.

Also in Fig. 10, it is probable that the magnetically soft layer 11 either of crystalline or of noncrystalline depends on temperature distribution of the film surface when the layer is being formed. For obtaining reproducible uniform characteristic, it is necessary for the magnetically soft layer to be formed under uniform distribution of temperature. For achieving this, nonmagnetic layer 12 with a great heat conductivity is suitable, leading to the inference that suitable component materials of the nonmagnetic layer are those with a great heat-conductivity such as Al and other nonmagnetic metals.

Fig. 12a and b illustrates the way of magnetic recording. The mechanism is the same described referring to Fig. 4.

The embodiment of magnetic recording medium comprising in lamination from top to bottom magnetic layer 10, nonmagnetic layer 12 and mgnetically soft layer 11 shows the characteristic of reproduction with time represented by curve d

in Fig. 6. In indicates high reproduction and minor time course change improved even compared with curve a.

The magnetic recording madium of this type was confirmed for time course-change in residual magnetic flux density to be excessively small as represented by plot a in Fig. 7.

Photomagnetic recording process, which is distinguished from the above-described magnetic recording process, will be described hereunder:

The photomemory is capable of being recorded at a high density without needing the forming of tracking guide, by laser beam adressing at any desired site with requirement for a high mechanical precision.

On the other hand, with progress of semiconductor laser, light writing/reading out devices has been increasingly smaller and lighter. This contributes to the construction that tracking guide is provided on a memory medium and the light recording/reproduction head moves relatively along the guide.

For example, a photomemory 31 shown in Fig. 13 to an enlarged scale is known which comprises a substrate 32 and thereon a record layer 30 provided with tracking guide consisting of a number of grooves 33 disposed side by side. The record layer 30 with tracking guide is subjected to the action of laser beam 23 represented by a dash-and-dot line 23 and thereby writing is made on the ridge 34. On the other hand, the reading-out laser beam 23 reflects from the light

reflective film (not shown) coated all over the surface of it. Reproduction and tracking of recorded information can be carried out through the utilization of phase difference in reflection of the reading-out laser beam 23 between from the ridge 34 and from the groove 33. Thus spotting of the beam on an area including the groove 33 enables the photo-recording/reproduction head to move to a desired position along the groove 33 while tracking servo is being driven. The photomemory is problematic in the respect that diffused reflection produced at the stepped portion between the tracking guide and the groove or recording area, renders precision of detection worse.

On the other hand, another type of photomemory by which information can be recorded and reproduced through the utilization of linear polarization, and also eliminated is known. A suitable photomagnetic medium for use in photomagnetic recording is known in which information is written by selectively forming in the perpendicularly-to-the plane magnetizable photomagnetic recording layer, uniform reversal magnetic domains to the magnetization polarity under the action as of laser beam. For the reading out the written information, detection can be made for the reflection with a photodetector through the utilization of change in or in-reversal-magnetization of polarization plane of the emitted laser beam in accordance with the direction of magnetization as the result of the so-called magnetic Kerr effect or Faraday effect, a

a magnetooptical effect.

The photomagnetic recording process is advantageous in high recording density, additionally capability of rewriting, and high reliability owing to recording/reproduction without needing contact between the recording medium and the head or lens.

A photomagnetic recording process is assumed of the construction that tracking is accomplished through the tracking guides formed as illustrated in Fig. 13. However, the utilization of magnetooptical Kerr or Faraday effect particularly of linear polarization, which is associated with slight emission of laser beam on the medium, falls into difficult detection for reflection when once diffused reflection has occurred, linear polarization has been caused to be disturbed, resulting in interference of noise.

A countermeasure against these defects is disclosed in Japanese Laid-open Patent Application No. 61031/1981, in which, as illustrated in Fig. 14, a perpendicularly magnetizable thin film of amorphous alloy of such as Gd-Fe, Tb-Fe, or Cd-Co is formed as photomagnetic recording layer on the substrate 32. The photomagnetic memory is subjected to heat-treatment at the thin film 40 by selective parallel emission of Ar laser beam 23 so that, as illustrated in Fig. 15, the irradiated portion 40a is crystallized. Thus it is featured by the anisotropy to be magnetizable parallel to the film

surface 41, namely in the distinguishing direction from the magnetization direction 42 of the unirradiated recording portion 40b. Thus, the irradiated portion 40a is not contributes, to photomagnetic recording by laser beam but capable of functioning as tracking guide.

The photomagnetic memory however has been investigated and observed by the inventors to have the following fatal defects:

(1) Because of the amorphus thin film, poor environmental stability and low durability due to oxidation and crystallization, reflecting deteriorationin optic and magnetic characteristic.

(2) Owing to the Kerr rotation angle of the amorphous film 40 as small as not more than about 0.4 degree, setting to great output is impossible, resulting in inferior S/N.

(3) The tracking guide 40 is formed by the crystallization of a desired amorphous portion through laser heating, so that large heat necessary for crystallization or laser beam energy tends to diffuse transversely, and makes it difficult for disired regions to be crystallized at exact dimensions, with a worse pattern precision of the formed tracking guide.

(4) For the above-mentioned crystallization, it is necessary to heat a thin film at high temperatures not less than about 400°C through a large power laser, involving disadvantageous operation and costs.

Under the circumstances, the inventors paid attention to the application of the perpendicular magnetizable film, for instance as indicated by reference character 10 in Fig. 1 to the photomagnetic memory, as above-described, and succeeded in obtaining a magnetic recording medium permitting tracking guide to be formed at high precision without difficulty and having good time-course characteristics at high output. A magnetic recording medium of such type was considered which comprises a magnetizable film made mainly from iron oxides, having a residual magnetization ratio ($M_V/M_H$) $\geq 0.5$, and treated to have selectively characteristic-changed segments, namely appropriate segments for tracking guide. The magnetizable film, which is made mainly from iron oxides, ensures recording and reproduction of good S/N ratio at stable output.

Besides, the magnetizable film is treated to form the segments of selectively-changed magnetic characteristics, particularly such as photomagnetic constant, magnetization, and coercive force, and serves as tracking guides. For the formation of the segments, it is necessary to change the crystal structure by means of laser beam, for example, conversion of $Fe_3O_4$ into $\alpha$-$Fe_2O_3$, and nothing else, involving a minimized heat energy necessary. The formation is accomplishable, for example, temperature as low as about 300°C, with

the resulting reduced transverse heat conduction, contributing to the formation of tracking guide segments at high precision and advantageous operation and costs.

Additional advantage of this preferred magnetic recording medium resides in the respect of the flattened surface of it, in contrast to the corrugated surface shown in Fig. 13, involving no diffused reflection, subsequently without noise, resulting, as it is matter of course, in better reproduction.

This preferred magnetic recording medium comprises, referring to Fig. 1, a magnetic layer 10 made mainly from iron oxides and of $M_V/M_H \geqq 0.5$, as a photomagnetic recording layer, on the substrate 6.

Fig. 16a shows an embodiment according to the invention in which the magnetic layer 10 is selectively exposed to laser beam 23, as shown in Fig. 14, whereby magnetic characteristics: magnetooptical constant and magnetization, of irradiated segments 10a are changed. The irradiated segments 10a can be formed by heating at about 300°C, especially in the case of conversion of $\gamma$-$Fe_2O_3$ into $\alpha$-$Fe_2O_3$ through laser beam 33. The crystal structure or lattice constant depends on the used iron oxides as under-listed. There are such thorough difference in magnetooptical constants (Kerr and Faraday rotation angles) from unirradiated segments 10b to be subjected to photomagnetic recording, that ensures the

segments 10a to perform the function of tracking guide.

| Before exposure to laser | After exposure to laser | |
|---|---|---|
| $Fe_3O_4$ (Cubic system) → | Fe | (Cubic system) |
| | $\alpha$-$Fe_2O_3$ | (Rhombohedral system) |
| | $\gamma$-$Fe_2O_3$ | (Cubic system) |
| | FeO | (Cubic system) |
| $\gamma$-$Fe_2O_3$ → | $\alpha$-$Fe_2O_3$ | (Rhombohedral system) |
| | FeO | (Cubic system) |
| | Fe | (Cubic system) |

The above-mentioned change in crystal structure (Crystals after change may be single system or mixed system of various crystals) appears as change in magnetooptical constant. Such change is seemed change in magnetization, depending on rate between divalent iron atom and trivalent iron atom. Besides such change, for example, can be produced by heating at about 300°C in air. If this is made in oxidizing atmosphere, treatment at lower temperature is possible. Magmetooptical constants not only vary with type of crystal, as above-described, but also depend on lattice constant (including in lattice constant due to the addition of metallic or nonmetallic elements or their oxides to iron oxides). Various lattice constants are summarized in the table on the next page.

| | Lattice Constant (Å) | ASTM Card |
|---|---|---|
| FeO | 4.037 | 6-0615 |
| $Fe_3O_4$ | 8.390 | 7-322 |
| $\gamma$-$Fe_2O_3$ | 8.350 | 4-0755 |
| $\alpha$-$Fe_2O_3$ | 5.43 | 6-0502 |
| CoO - $Fe_2O_3$ | 8.33 | 3-0864 |

Besides, as heating means for causing the above-mentioned change can be used, instead of laser as of He-Ne, direct or radiation heating with resistance, halogen lamp or the like, so far as they can accomplish selective heating.

Figs. 16 b, c and d shows magnetic recording media with a tracking guide 10a of different magnetooptical constants from those of the photomagnetic recording segments 10b in the top, bottom and middle zone, respectively, of the magnetic layer 10. They likewise permits photodetection for change in Kerr and Faraday rotation angles always in the absence of light dispersion. These examples shown in Figs. 16b, c and d are advantageous for the tracking guides 10a to have 20 Å to 5 μm, preferably 50 Å to 2 μm. At thicknesses of not more than 20 Å, not much change in magnetooptical constant was observed, and at thicknesses exceeding 5 μm, tendency of pattern precision to decrease due to the heat diffusing phenomenon. The magnetic layer shown in Fig. 16c, consisting upper and lower magnetic sublayers partitioned with a broken

line is formed as follows: Firstly the lower magnetic sublayer is formed and exposed to laser beam to form segnents 10a, followed by superposition of the upper magnetic sublayer over the lower magnetic layer. All the structures shown in Figs. 16b, c and d can be formed by carrying out not only selective heating the previously prepared lamination consiting of top, bottom and middle sublayers but also by local exposure to laser beams of appropriate energies (Rp) to form segments 10a at a desired depth of a single magnetic layer.

As described above, heat-treatment can be made in any atmosphere under-mentioned other than in air:

(1) Oxidizing atmosphere

In oxidizing atmosphere of $10^{-2}$ to 10 atmospheric pressures in oxygen partial pressure, heat treatment such as by exposition to laser causes effectively oxidation, namely conversion of $Fe_3O_4$ into $\alpha$-$Fe_2O_3$ or $\gamma$-$Fe_2O_3$ and of $\gamma$-$Fe_2O_3$ into $\alpha$-$Fe_2O_3$. At $O_2$ partial pressure of less than $10^{-2}$ atmospheric pressure, oxidation effect is mild while at that exceeding 10 atmospheric pressures, an ambitious apparatus is necessary. Oxygen partial pressures between $10^{-1}$ to 2 atmospheric pressures is preferred.

(2) Reducing atmosphere

By treatment in atmosphere as of hydrogen, CO, $NH_3$ or methanol gas having partial pressure of $10^{-2}$ to 10 atmospheric pressures , preferably $10^{-1}$ to 2 atmospheric

pressures, $Fe_3O_4$ can be reduced into Fe and FeO, and γ-$Fe_2O_3$ into $Fe_3O_4$, FeO and Fe.

(3) Inert gas atmosphere

Heat-treatment can be made in inert gas atmosphere of He, Ne, Ar, Kr, Xe or the like, or in atmosphere of a mixed gas of an inert gas and an oxidizing or reducing gas. Then the same gas pressure as above-mentioned may be employed.

An experiment will be described in the following: over a glass substrate, an iron oxide perpendicular magnetizable film is coated by the later-described opposed target method. Then the magnetizable film was scanned by He-Ne laser beam (50 mW) to change in crystal structure and consequently to form tracking guide for photomagnetic memory. For comparison, known amorphous Tb-Fe perpendicular magnetizable film is coated over a glass substrate, then tracking guides were formed in the same way as above-mentioned. Necessary laser output on the film surface for forming tracking guides in the examples was as follows:

| Perpendicular magnetizable film | Laser output (mW) |
|---|---|
| Iron oxides (According to the invention) | 10 |
| Amorphous Tb-Fe (Comparative) | 13 |

The data indicates that the magnetic recording medium according to the invention can be provided with desired tracking guides by the action of laser beam of smaller power.

Fig. 17a, b and c illustrate a process of preparing segments 10a of different lattice constant as tracking guide in the magnetic layer 10 for instance by droping Co, as follows: Firstly a magnetic layer 10 is formed on a substrate 6, as shown in Fig. 17a. Then Co film 43 is coated over it by vacuum evaporation coating method, followed by etching to a desired pattern illustrated in Fig. 17b by photolithographic technique. Subsequently, as Fig. 17c shows, while heating at relatively low temperature of 300°C, Co is diffused just downwards into the magnetic layer 10 in accordance with the pattern of the Co film. Thus Co-doped segments 10a of a different lattice constant from that of the other regions are formed as tracking guide. Diffusion of Co is possible even at such relative low temperature because it has a great diffusion coefficient. Further the projecting parts of the Co segments 10a from the surface of the magnetic layer are removed by etching. The obtained product is identical with the medium illustrated in Fig. 16b.

Fig. 18 illustrates the essential parts of a photomagnetic memory apparatus with the above-mentioned photomagnetic recording medium incorporated in it. A photomagnetic recording medium, as of disk type 44, is incorporated rotatably.

Laser beam 23 is emitted from a laser source 52 as of semiconductor laser, passing through a polarization plate 54, reflected on a half mirror 45 and focused on the photomagnetic recording layer 10 through a lens 46 and coil 47. The right reflection 49 from the recording layer 10 passing through the half mirror 45 and an analyser 50 and incides into a photodetector 51. Both writing on and reading out can be made by the same optical system above-mentioned, though greater laser power is applied at writing than at reading out.

Before the above-mentioned writing is made, the recording layer 10 of a disk 44 is subjected to selective heat-treatment by exposure to He-Ne laser to form tracking guide.

The preferred embodiment of magnetic recording medium is suitable as photomagnetic memory, but the magnetically soft layer 11 is not always necessary for use in mere photomagnetic memory. The medium is applicable to not only photomagnetic memory but also to those utilizing electromagnetic mutual action for recording/reproduction of information, such as general magnetic disks, tapes and cards. The above-described iron oxide magnetic layer of the medium not only exhibits perpendicular magnetization characteristic but also has segments heat-treated for example, exposure to laser to have changed magnetization orientation. The utilization of the defference in perpendicular magnetization between the

segments (of tracking guide) and the perpendicular magnetizable segment enables recording/reproduction under the running of the tracking servo.

Another preferred embodiment suitable as photomagnetic recording layer, unlike the medium illustrated in Fig. 16, is shown in Fig. 19, with comprises a magnetic layer 10 of $M_V/M_H \geq 0.5$, made mainly from iron oxides on the substrate 6, and provided with grooves 61 extending perpendicularly to the drawing plan as tracking guide.

Figs. 19a to d shows various magnetic layers 10 with grooves 61 of different cross-sections. In the figures, a numerical character 62 designates a reflective film or layer as of Al, Cu, Ag or Au. In these embodiments, writing by exposure to laser beam and reproduction are made, with grooves 61 provided in the magnetic layer 10 srving as tracking guide. The tracking servo can be caused to run by detecting a factory of the reflection such as difference in phase or reflected strength between the groove bottom and the ridge.

Referring to Figs. 19a, b and c, the widths $W_1$ and $W_2$ of the grooves 61 and ridges for signals to be recorded are preferred 0.2 to 5 μm. Though it may be set in accordance with the dimentions, or spot diameter of beam applied, about 1 μm is preferred for the photomagnetic memory. It can be changed in accordance with the wavelength of applied beam and desired recording density. The depth d of the grooves 61

is advantageous to be 100 Å to 5 μm, preferably 500 Å to 3 μm. Depths of less than 100 Å makes it difficult to form continuous film or magnetic layer 10 on the substrate 6. Depths exceeding 5 μm is associated with poor function of tracking guides.

Figs. 20a, b and c shows in plan view various patterns of grooves 61, which are applied to the tracking guides shown in Figs. 16.

It is probable that the grooves 61 can be formed by various methods. For instance, the substrate 6 is coated on the surface with such as metal Al, Ti, V, Cr, Mo, Fe, Co, Ni, Cu, Zn, Ga, Ge, Se, Rb, Ta, Ru, Rh, Pd, Ag, In, Sn, Te or Au, nonmetal, its compound, oxide, or nitride to a thickness of 100 Å to 5 μm, preferable 500 Å to 2 μm. The obtained thin film is subjected to heat-treatment by exposure to laser beam for desired pattern to be formed. Subsequently, in the magnetic layer 10 on it, grooves 61 shown in Figs. 19a and c are produced. Some other methods are described under: As indicated by the dash-and-dot lines in Fig. 19c, the substrate 6 is scanned along a desired pattern by high power Ar laser (50 to 100 mW). Alternatively, injection molding of substrate material formation of grooves 63 in the substrate itself, and then overall coating of a light reflective film 62, followed by a magnetic layer 10, may be performed. The reflective film is preferred of thicknesses in the above-

mentioned range. At thicknesses of less than 100 Å, continuous thin film cannot be form because grooves 63 are cut by steps. Thicknesses exceeding 5 μm takes inadequate effects. In the embodiment which Fig. 19b shows, the magnetic layer 10 on the reflective film is etched chemically to a halfway in relation to depth as by photolithography known per se, to form guides 61. In the embodiment shown in Fig. 19d, after overall coating of the reflective film 62, followed by magnetic layer 10, photoetching of magnetic layer 10 and reflective film 62 are made in the same pattern. Alternatively, a dissoluble photoresist is coated on the substrate 6 in the same pattern as that of guide, then in turn reflective film 62, magnetically soft layer 11 and magnetic layer 10 being in lamination formed by overall coating. Subsequently treatment with a suitable solvent was made to dissolve the photoresist and at the same time to lift off the reflective film 32 and magnetic layer defined just on the photoresist. Thus the structure shown in Fig. 19d comprising reflective film 62, magnetically soft layer 11 and magnetic layer 10 and being provided with guide 61 are obtained. In addition, the magnetic recording media utilizing photomagnetic effect is not necessary to equip with photoeffective layer 62 and magnetically soft layer 11. The equipment with them is preferred, sometimes for instance, in the case of not higher sensitibity.

Example 1

Over a disk-shaped glass substrate, Al was deposited at a vacuum of $10^{-6}$ Torr by vacuum evaporation coating technique to form Al film of 1000 Å in thickness. The Al film was subjected to heat-treatment while scanned by Ar laser beam (50 mW), and so processed that grooves of 2 μm wide were formed at a pitch of 2 μm in the Al film. Then a magnetically soft layer was formed all over the Al film including the grooves, followed by overall coating with iron oxides magnetic layer of 1000 Å thick on the magnetically soft layer by the use of the opposed targets sputtering apparatus.

With the thus-prepared recording medium provided with tracking guide, photomagnetic recoading was made in known way. Then while exposed to laser beam with a tracking servo driven, reflection was measured with an avalanche photodiode.

Example 2

By injection molding technique was prepared a disk substrate of polymethylmethacrylate provided with grooves, each of 2 μm wide and 1000 Å deep, disposed at a pitch of 2 μm. On this, in turn, a magnetically soft layer and iron oxide magnetic layer of 1000 Å thick were formed. Then, measurement of reflection was carried out in the same way as described in Example 1.

Comparative Example

For comparison, a disk medium with a magnetic layer of

amorphous Tb-Fe film, instead of iron oxide magnetic layer was prepared in the same way as in Example 1, and measurement of reflection was likewise made.

The data obtained in these example are illustrated in summarized way in Fig. 21, in which different directions of magnetic moment between the recorded and unrecorded parts are indicated at the magnetization regions between tracking grooves 61 (Reflection film not shown). The results revealed that, compared with the amorphous Tb-Fe magnetic layer, the iron oxide magnetic layer according to the invention permits approx. equal or more reflection and reproduction characteristic of high output and great S/N ratio.

As Fig. 22 shows, a priming 70 on which a magnetic layer 10 is superposed is formed as a crystal layer made from such ar Al or Ag. The magnetic layer 10 may be a perpendicularly magnetizable film 10 made from iron oxides of $Fe_3O_4$ and $\gamma$-$Fe_2O_3$ and of about 1 μm in thickness. The crystalline priming 70 is formed by known sputtering technique, which is not described.

Magnetic recording media of this type permits the magnetic layer 10 to be magnetizable perpendicularly to the in-plane. Moreover it is base or priming crystal layer that plays important role for such development of crystal structure. Figure 23 shows, in relation to the magnetic recording medium with magnetic layer 10 on the crystal priming 70 of Al or

Ag, the dependence of $M_V/M_H$ of the magnetic layer on peak reflectivity representing the perpendicular-orientation degree of [111] plane of the crystal priming having face-centered cubic structure, to the film plane. This makes it apparent that increase in orientation rate of crystals in the priming results in good perpendicular magnetization characteristic. In particular, for obtaining $M_V/M_H \geq 0.5$, it is obviously necessary to cause the crystals of the priming to orientate so that peak reflectivity is more than about 0.8 Kcount/sec.

As understood from the above-described, the orientation of the crystal in the magnetic layer is in accordance with the orientation of the priming crystal and hence the thus-formed priming for the magnetic layer, which is a crystal layer having anisotropy corresponding to a desired orientation of the crystal in the magnetic layer. namely of $M_V/M_H \geq 0.5$, ensures the formation on the priming, of the magnetic layer as a perpendicularly magnetizable film with good anisotropy. This implys that the priming crystal has a preferred orientation, namely that desirable rates of particles having anisotropy is relatively great or more than 30 % of all particles.

Above-described, the crystalline characteristic of the priming results, in turn, improvement, in perpendicular orientation of the magnetic layer, and in production of magnetic

recording media having recording/reproduction characteristic of high sensitivity and great S/N ratio.

Suitable materials for use in a component of the priming crystal are organic high molecular compounds such as polyethylene terephthalates, polyimides and polyamides; metals, nonmetals and semimetals such as C, Mg, Al, Si, Ti, V, Cr, Mn, Cu, Zn, Ga, Ge, As, Se, Rb, Zr, Nb, Mo, Ag, Cd, In, Sn, Sb, Te, Ta, W, Rh and Au; their compounds and oxides. The priming is preferred to be an anorganic substance from the viewpoints of the adhesiveness to substrate and the ability to form a surface of desired roughness leading readily to perpendicular magnetizable film. The lattice constant of the crystal in the priming is preferred to be approximate to that of iron oxides of the magnetic layer. Furthermore the crystalline priming can be formed in various techniques as of vacuum evaporation coating, ion plating, sputtering, electroplating and electroless plating.

Besides, the priming for the magnetic layer may be composed of non-crystalline material in the place of crystalline material. The non-crystalline priming layer, which is, for example, of amorphous $SiO_2$ and having a thickness of about 0.5 µm, and formed for instance by known vacuum evaporation technique (Room temperature, oxygen gas atmosphere, evaporation rate of 200 Å/sec, electron beam heating), which is not described. The priming was demonstrated to be non-

crystalline with X-ray diffraction apparatus (Nihon Electron Co., Ltd., Japan) and also by reflective electron ray diffraction. When the magnetic layer is formed on another layer composed of improperly-orientated crystals without the intervention of the non-crystalline layer, magnetic material to constitute magnetic layer may not develop in desired direction and consequently the obtained layer may not exhibit perpendicular magnetization characteristic. On the contrary, the provision of the non-crystalline priming between magnetic layer and substrate permits development of magnetic layer orientated in a desired direction and having a correspondingly improved perpendicular magnetization characteristic. Additional attention should be paid to the respect that the priming layer which is non-crystalline, hence not orderly crystal structure has surface isotropic in relation to energy associated with uniform distribution of sites to which iron oxides particles developing on the surface attach reflecting higher rate of iron oxides to deposit in desired direction, namely in perpendicular direction of, in particular, for example [111] plane for $Fe_3O_4$ particle or crystal and [100] plane for $\gamma$-$Fe_2O_3$ particle or crystal to the in-plane. On the other hand, it is thought that on crystalline layer, iron oxide particles deposit with smaller rate in effective direction because there are sites stable in relation to energy between lattices of crystals, which is associated

with localized attachment of the particles. These leads to the inference that iron oxide particles are deposited on non-crystalline priming in non-crystalline state and then on the formed non-crystalline iron oxide layer, to develope as crystal structure in a desired direction, thus collectively effective perpendicular magnetization film being formed.

Further advantages are in the respects that non-crystalline intervention layer can be formed at as low as several hundreds degrees on Celsius temperature scale of substrate by vacuum evaporation technique. This enables the use of relating poor heat-proof material of substrate and the selection from more kinds of material.

Fig. 24 shows in comparison the $M_V/M_H$ of the magnetic layer of each of magnetic recording media with and without non-crystalline priming (of $SiO_2$). The graph indicates that the presence of the non-crystalline priming permits good permits good perpendicular magnetization characteristic and in particular $M_V/M_H \geq 1.0$, whereas the absence of it results in decreased $M_V/M_H$.

As a further preferred embodiment, on the Al alloy substrate 6 is formed a poly-crystal priming composed of multicrystal oxides and of about 0.5 μm in thickness, on which a perpendicular magnetizable film 10 made from iron oxides: $Fe_3O_4$ and $\gamma$-$Fe_2O_3$ and of about 1 μm thick is made.

Alternatively, the priming can be formed by oxidation

treatment of the surface of Al alloy substrate 6 according to such as known heat-oxidation method, but without needing to form any magnetically soft layer.

The application of such a poly-crystal layer with substantially no anisotropy as a priming for a magnetic layer to be formed permits magnetic layer material to develope in a desired direction, without the influence of the substrate, and hence with an improvement in perpendicular magnetization characteristic. Attention should be paid to the respect that poly-crystals in the priming do not have anisotropy, especially do not exhibit preferred orientation: the property in which the majority of paticles not less than 30 % of all particles having crystalline axes orientated in a specified direction, that is to say, the rate of such particles is less than 30 %. Hence the multicrystals have surface isotropic in relation to energy associated with uniform distribution of sites to which iron oxides particles developing on the surface attach, reflecting higher rate of iron oxides to deposit in desired direction, namely in perpendicular direction of, in particular, for example [111] plane for $Fe_3O_4$ particle or crystal and [100] plane for $\gamma$-$Fe_2O_3$ particle or crystal to the in plane. On the other hand, it is thought on crystalline layer, iron oxide particles deposit with smaller rate in effective direction because there are sites stable in relation to energy between lattices of crystals,

stable in relation to energy between lattice of crystals, which is associated with localized attachment of the particles.

Further advantages reside in the respects that polycrystalline priming can be formed at lower temperature of substrate than in growth of single crystal by vacuum evaporation technique. This enables the use of relative poor heat-resistant material of substrate and the selection from more kinds of material.

With a magnetic recording medium according to the invention with a priming of polycrystalline oxide layer between substrate and magnetic layer 10 and another medium without the same, ratio between residual magnetizations: $B_{rH} = M_H$ and $B_{rV} = M_V$ in the in-plane and perpendicular-to-plane directions of the magnetic layer, respectively, was determined and the obtained results were given under.

| Substrat | Polycrystalline priming | $B_{rV}/B_{rH} (M_V/M_H)$ |
|---|---|---|
| Al alloy | Presence | 0.5 to 0.8 |
| Al alloy | Absence | 1.3 to 1.6 |

The data indicates that the existence of polycrystalline priming ensures good perpendicular magnetization characteristic and in particular $M_V/M_H \geq 1.0$, whereas without applica-

tion of it, inadequate $M_V/M_H$ results. It was demonstrated by X-ray diffraction that the surface of the priming gives many peaks and was isotropic. The priming may be formed with non-magnetic or magnetic material, so far as it does not exhibits preferred orientation, especially is unorientated.

Fig. 25 illustrates a further preferred embodiment of magnetic recording embodiment in which, on a substrate 6, a priming 71 composed of an array of islands is formed, overall on which an iron oxide perpendicularly-magnetizable film or magnetic film 10 is dispoded.

The priming 71 is formed, for example, by depositing In by vacuum evaporation coating technique. Then In which is great in surface energy is deposited in a pattern of scattered islands.

In the thus-obtained priming 71 with a large number of projections or islands and pits, magnetic material is in sequence deposited and developed in the pits perpendicularly to the substrate plane, and in the same way at domains between pits. As the result is formed a magnetic layer of the so-called columnar structure with improved anisotropy in relation to magnetic characteristic perpendicular to the in-plane. Such columnar structure contributes to improvement in orientation or perpendicular magnetization characteristic. On the contrary, on the even and smooth surface of a priming, is formed a magnetic layer of disorderly orientation, hence without possibility for desirable columnar structure to be established.

The priming 71 is composed of a large number of scattered small island-shaped projections or masses 72, as illustrated to an enlarged scale in Figs. 26a and c. Thus on the priming magnetic particles 73 are deposited and developed, as illustrated in Fig. 26b, in perpendicular orientation to the substrate through the interference of pits among the masses. At the same time, on each island 72, orientated development is made under the interference of the piled or deposited particles on the pits.

At the result, a magnetic layer 10 is formed to be of columner structure poled in order substantially perpendicularly as a whole. The columnar structure involves enhancement in shape-anisotropy and improvement in magnetic characteristic. For achieving this, it is necessary for mean film thickness of the priming 71 to be set to the range of 10 to 1000 Å.

On the contrary, too thin thickness of the priming less than 10 Å, result in too minute masses in the scattered pattern shown in Figs. 27a and b, to cause the columnar structure to be established. Exceeding 1000 Å in thickness of the priming is too thick to be scattered islands pattern because, as shown in Figs. 27c and d, such great masses 72 as placed in contact with each other are made, resulting in a flat priming with neither projection nor pits.

The scattered islands pattern of the priming 71 is preferred to composed of a large number of uniformely-distributed substantially r o u n d islands because magnetic particles are depositted by the application equal energy, thus uniform columnar structure being obtained.

The priming 71 can be formed by depositting material on the overall surface to form a priming, followed by etching after the pattern illustrated in Fig. 26 by known photolithography.

An example demonstrating the effect of the priming is described under:

On a substrate was formed by vacuum evaporation coating technique a priming of In, on which a perpendicularly magnetizable layer of iron oxide was coated by the abovementioned opposed targets sputtering method. By the same procedure, products with priming layers of varying mean thicknesses were obtained, and used for measuring the perpendicular magnetization characteristic ($M_V/M_H$) of the magnetic layer.

The obtained results are summarized in the table on the page.

As apparent from the data, provision of priming is significantly effective, and preferred thicknesses of it are in the range of 10 to 1000 Å.

Instead of the pattern illustrated in Fig. 26, the priming of the pattern illustrated in Fig. 28 is of use.

| Mean film thickness of priming (Å) | $M_V/M_H$ |
|---|---|
| Absence of priming | 0.8 |
| 10 | 1.0 to 1.2 |
| 100 | 1.3 to 1.6 |
| 300 | 1.5 to 2.0 |
| 500 | 1.5 to 2.0 |
| 1000 | 1.3 to 1.6 |
| 1200 | 1.0 to 1.2 |

Fig. 28 illustrates an alternative priming 71. It is provided with a large number of scattered pits, on contrary to the above-mentioned embodiment, and formed by coating priming material on the overall surface, followed by photolithographic etching. Likewise on the priming, magnetic particles are deposited in perpendicularly orientated way, consequently to establish a desired bundled column structure. The priming shown in Fig. 28 may be relatively thick as of 1 μm or less.

Suitable component material of the primings, which is preferred to be different from substrate material, are such as In, Ti, Cr, Al, Bi, Si, Ag, Au. C, Mg, V, Mn, Cu, Zn, Zr, Mo, Sn, Sb and Nb. Out of these, In, Al, Bi and C having great surface energy are preferred because of the tendency to be formed into priming of scattered islands pattern abovementioned.

It will be evident that various modifications can be made to the described embodiments without departing from the scope of the present invention.

What is claimed is:

1. A magnetic recording medium comprising a high magnetic permeability material layer and a magnetic layer, the magnetic layer

(a) being continuous magnetic layer made mainly from iron oxides, and

(b) having not less than 0.5 of ratio between perpendicular-to-plane residual magnetization and in-plane residual magnetization: $M_V/M_H$.

2. A magnetic recording medium as claimed in claim 1 wherein iron oxides of said magnetic layer have substantially perpendicular anisotropy to the in-plane.

3. A magnetic recording medium as claimed in claim 1 wherein iron oxides of said magnetic layer is of spinel structure.

4. A magnetic recording medium as claimed in claim 1 wherein said high magnetic permeability material layer is more than $10^2$ in magneticpermeability, $\mu i$, and not more than 10 Oe in coercive force, Hc.

5. A magnetic recording medium as claimed in claim 4 wherein said high magnetic permeability material layer is magnetizable to the in-plane of said magnetic layer.

6. A magnetic recording medium as claimed in claim 1 wherein said high magnetic permeability material layer is of 0.05 to 5 μm in thickness.

7. A magnetic recording medium as claimed in claim 1 wherein said high magnetic permeability material layer, a nonmagnetic layer and, as top layer, said magnetic layer are laminated.

8. A magnetic recording medium as claimed in claim 7 wherein said non-magnetic layer has a thickness of 100 Å to 5 µm.

9. A magnetic recording medium as claimed in claim 1 wherein said magnetic layer has regions of selectively-changed magnetic characteristics.

10. A magnetic recording medium as claimed in claim 1 wherein said magnetic layer is provided with grooves.

11. A magnetic recording medium as claimed in claim 1 wherein as the priming for said magnetic layer is provided a crystalline layer orientated correspondingly to the anisotropy of said magnetic layer.

12. A magnetic recording medium as claimed in claim 1 wherein said nagnetic layer is formed on an non-crystalline priming layer.

13. A magnetic recording medium as claimed in claim 1 wherein a priming layer of polycrystals with substantally no definite orientation is provided.

14. A magnetic recording medium as claimed in claim 1 wherein said substrate has on the surface a priming with a large number of scattered projections or pits and said magnetic layer is formed on said priming.

Fig. 1

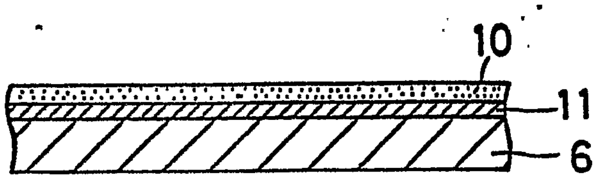


Fig. 2

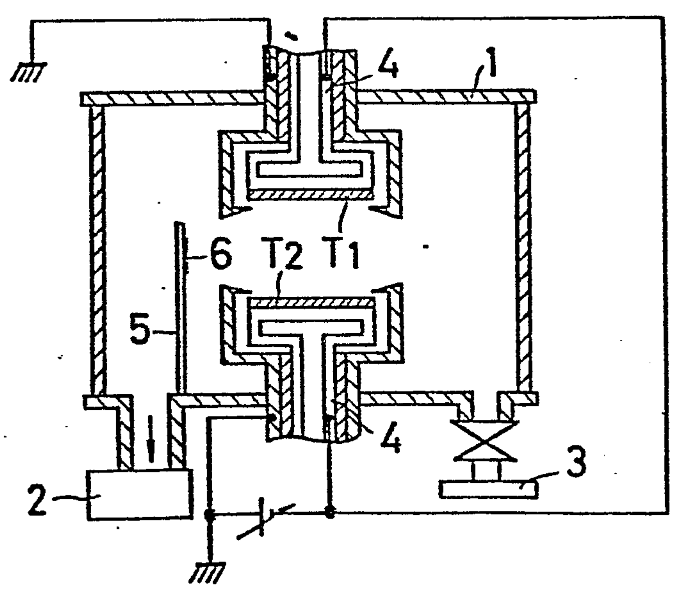

Fig. 3

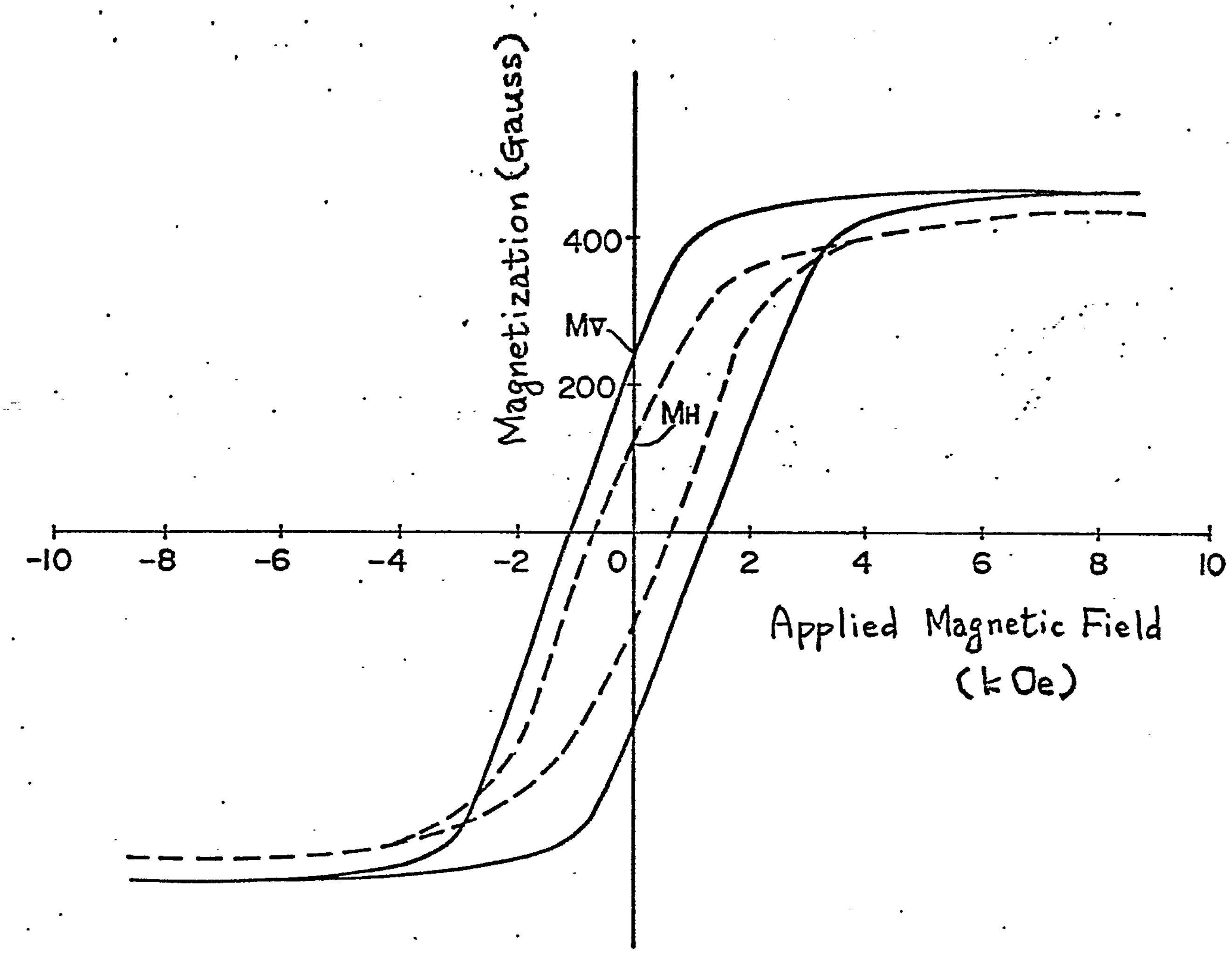
Magnetization (Gauss)
400
200
MV
MH
-10
-8
-6
-4
-2
0
2
4
6
8
10
Applied Magnetic Field
(kOe)

Fig. 4

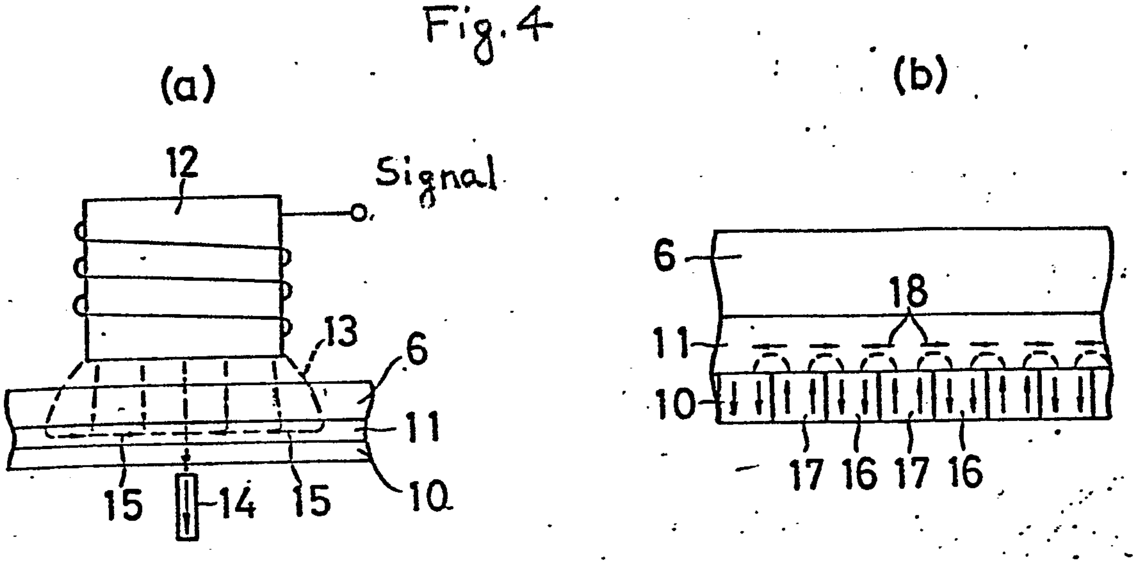
(a)
12
Signal
13
6
11
10
15
14
15
(b)
6
18
11
10
17 16 17 16

Fig. 5

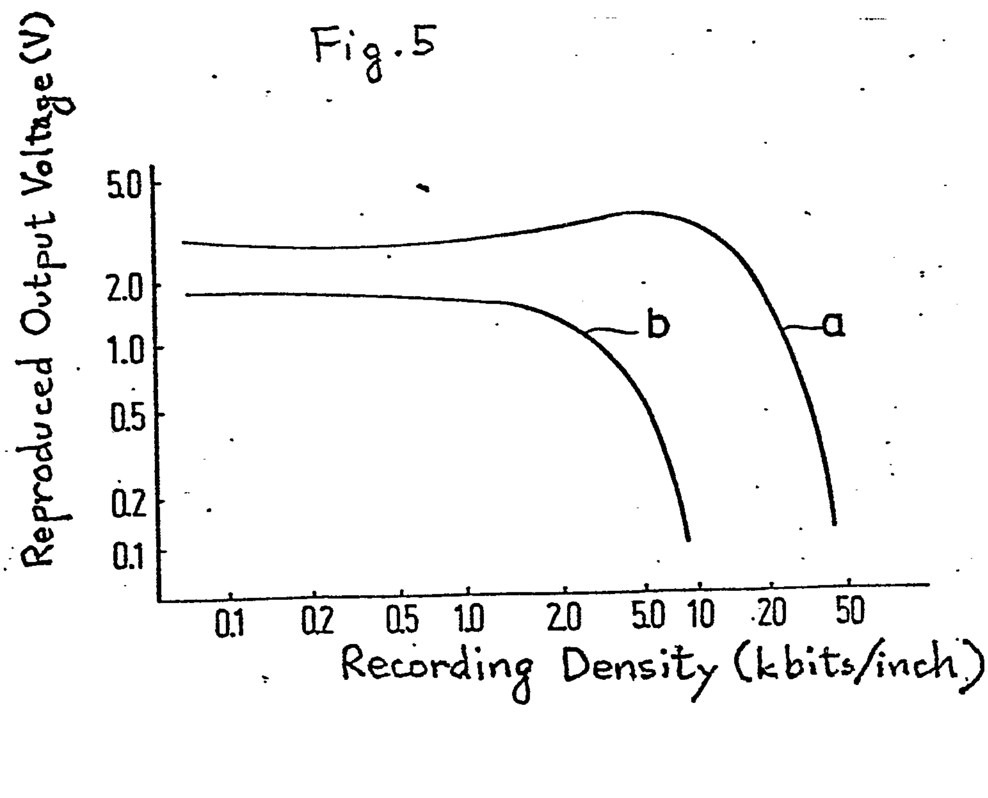
Reproduced Output Voltage (V)
5.0
2.0
1.0
0.5
0.2
0.1
b
a
0.1 0.2 0.5 1.0 2.0 5.0 10 20 50
Recording Density (kbits/inch)

Fig. 6

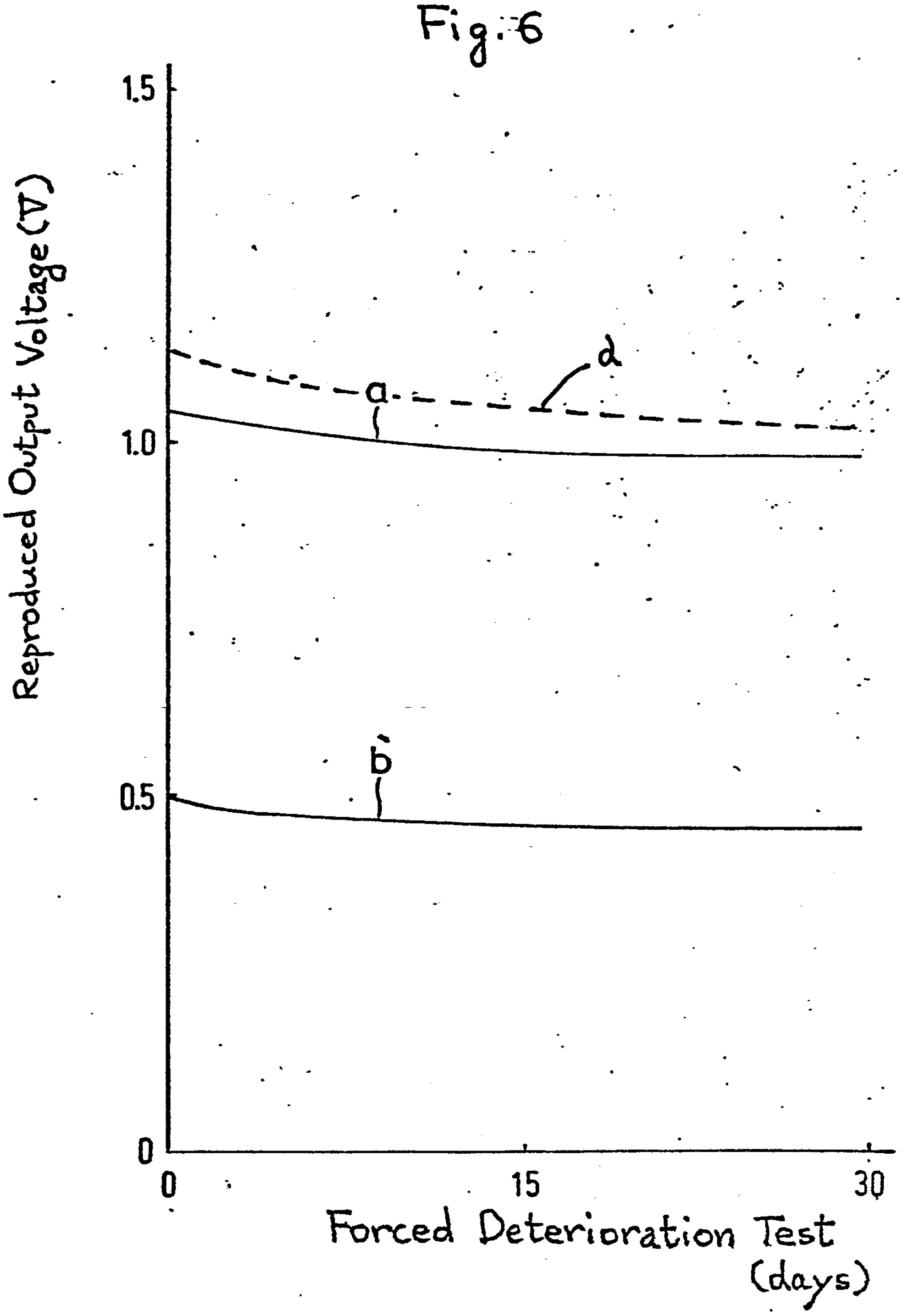
1.5
1.0
0.5
0
Reproduced Output Voltage (V)
a
b
d
0
15
30
Forced Deterioration Test (days)

Fig. 7

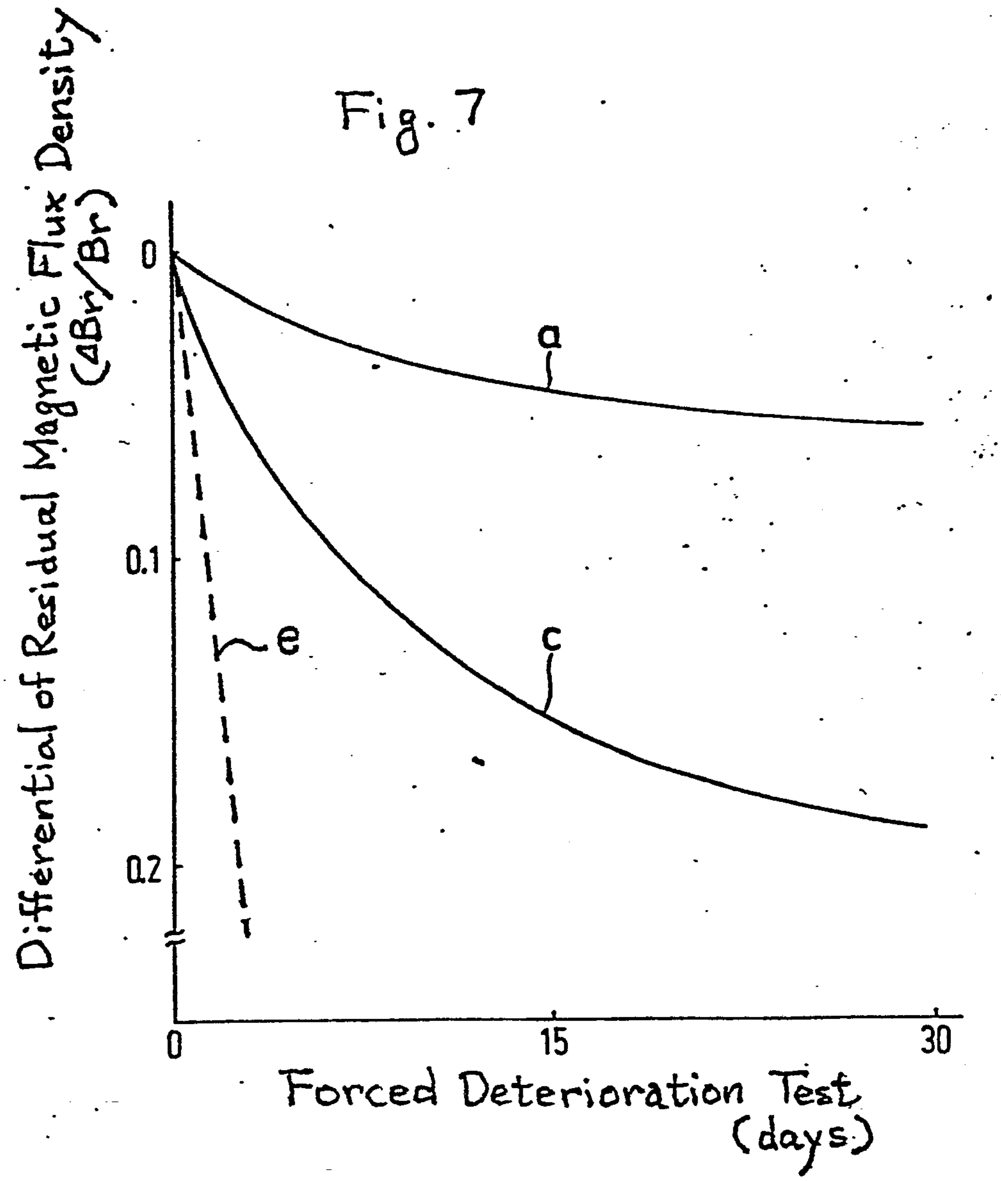
Differential of Residual Magnetic Flux Density
(ΔBr/Br)
0
0.1
0.2
a
c
e
0
15
30
Forced Deterioration Test
(days)

Fig. 8

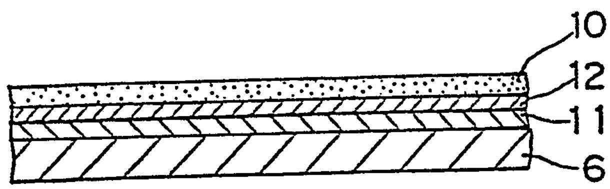
10
12
11
6

Fig. 9

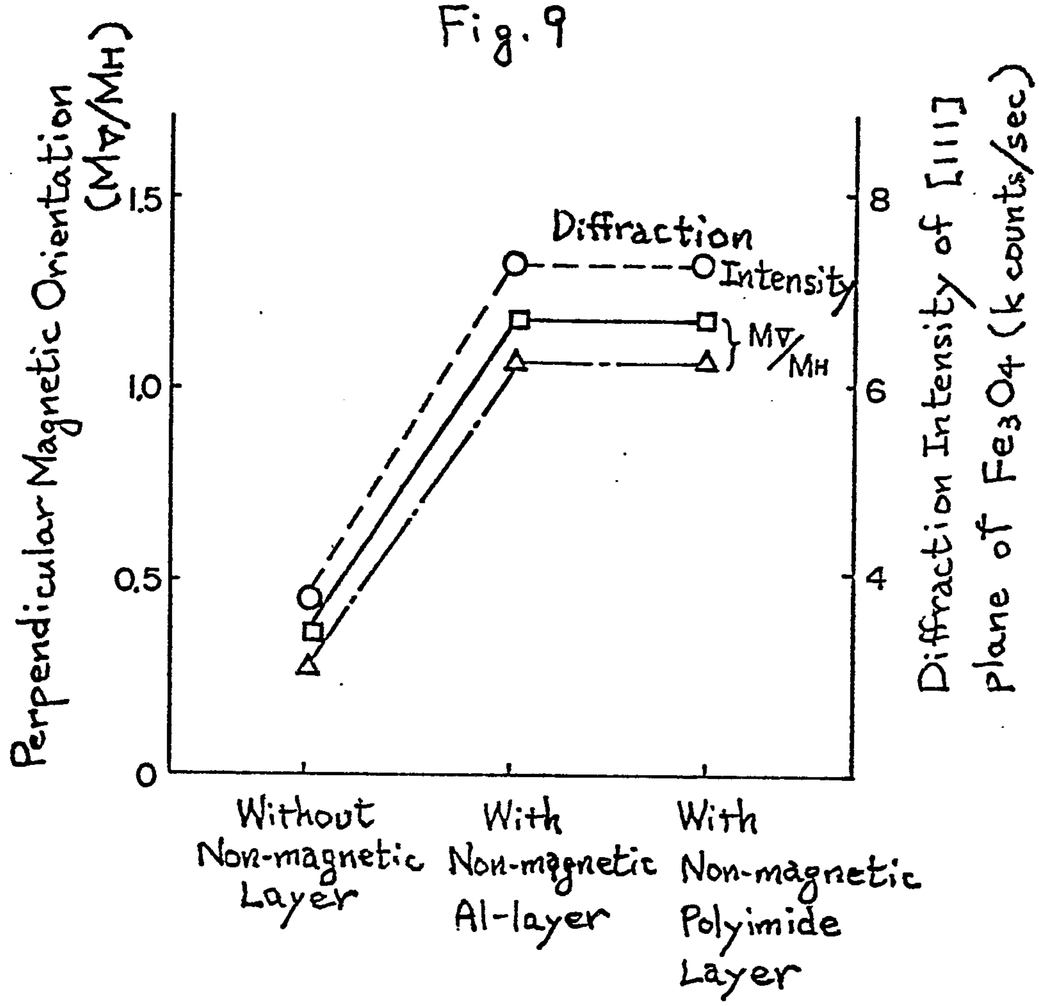
Perpendicular Magnetic Orientation (Mv/MH)
0
0.5
1.0
1.5
Diffraction Intensity
Mv/MH
Diffraction Intensity of [111] plane of $Fe_3O_4$ (k counts/sec)
4
6
8
Without Non-magnetic Layer
With Non-magnetic Al-layer
With Non-magnetic Polyimide Layer

Fig. 10

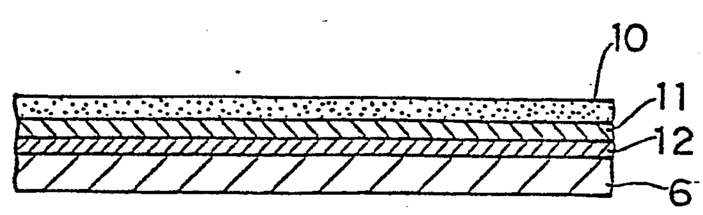
10
11
12
6

Fig. 11

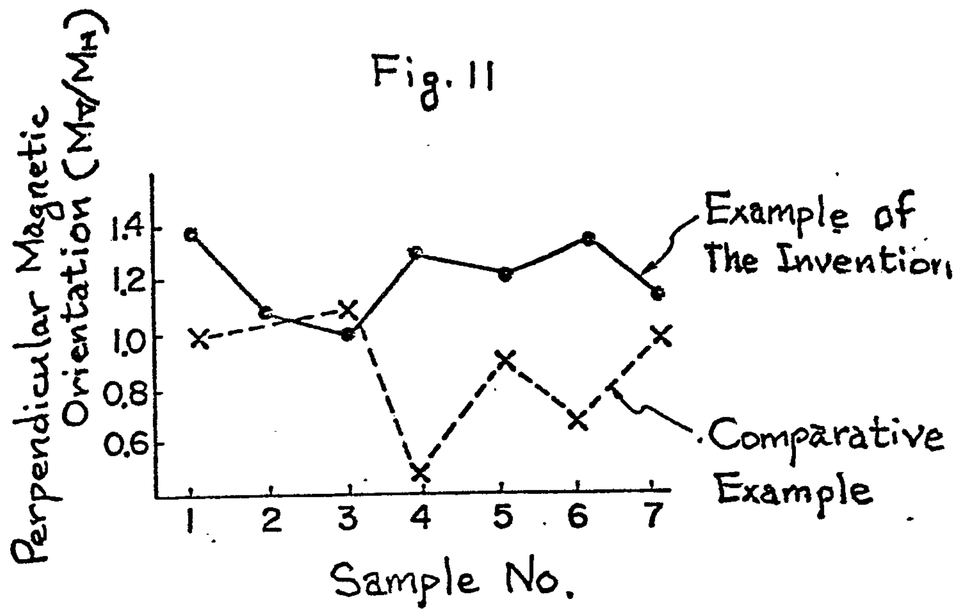
Perpendicular Magnetic Orientation (MV/MH)
1.4
1.2
1.0
0.8
0.6
1
2
3
4
5
6
7
Sample No.
Example of The Invention
Comparative Example

Fig. 12

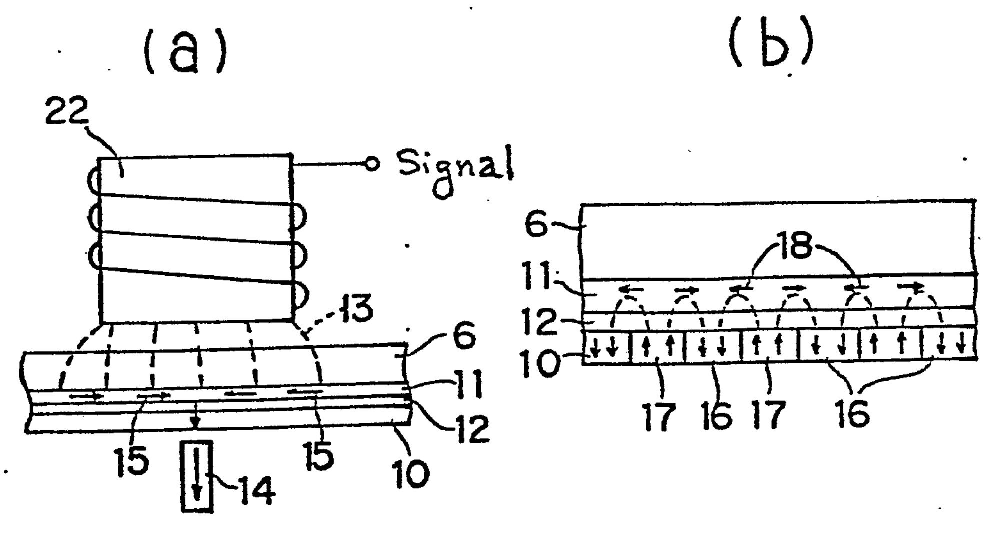
(a)
22
Signal
13
6
11
12
10
15
15
14
(b)
6
18
11
12
10
17
16
17
16

Fig. 13

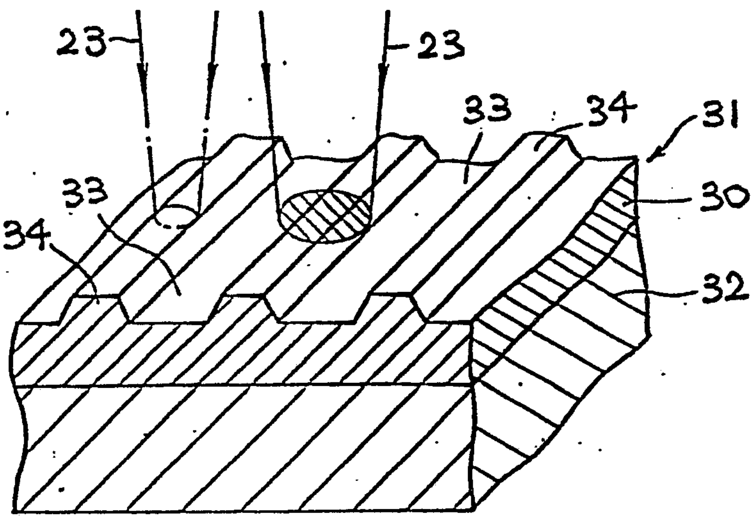


Fig. 14

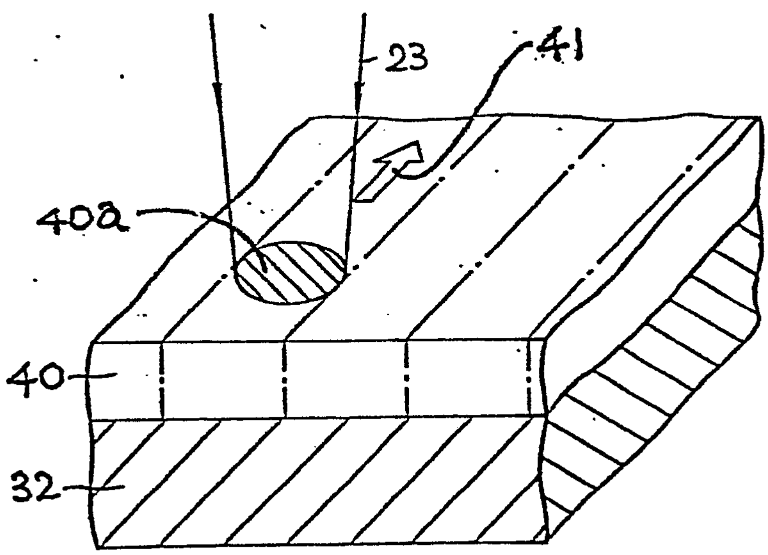

Fig.15

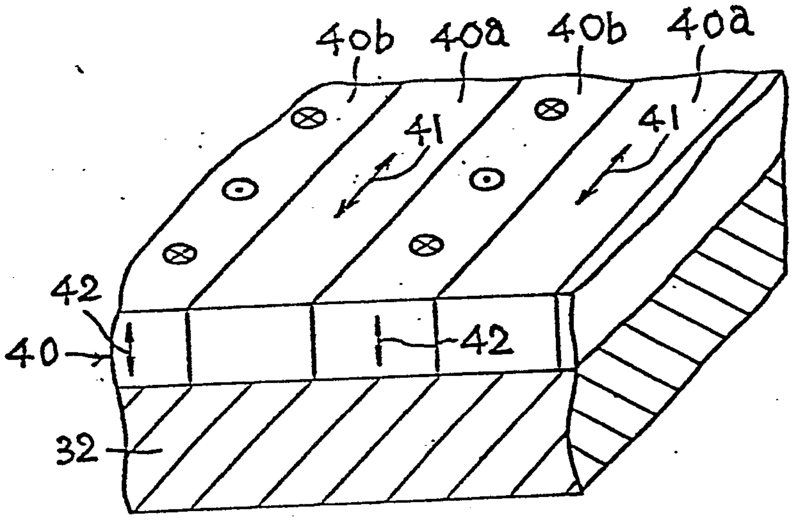

Fig. 16

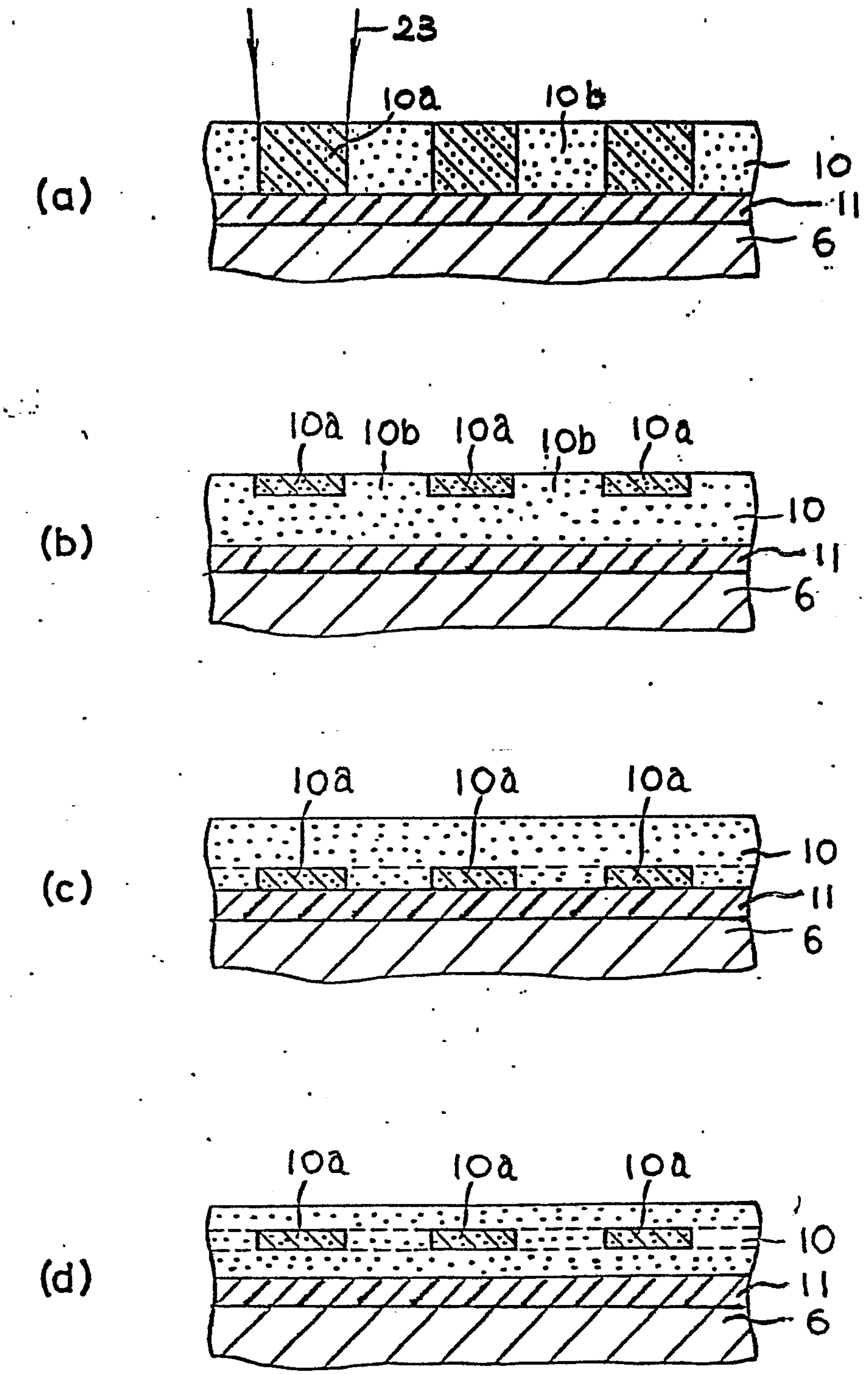

23
10a
10b
10
11
6
(a)
10a
10b
10a
10b
10a
10
11
6
(b)
10a
10a
10a
10
11
6
(c)
10a
10a
10a
10
11
6
(d)

Fig. 17A

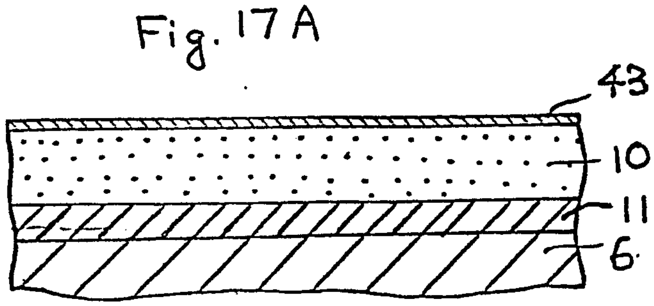


Fig. 17B

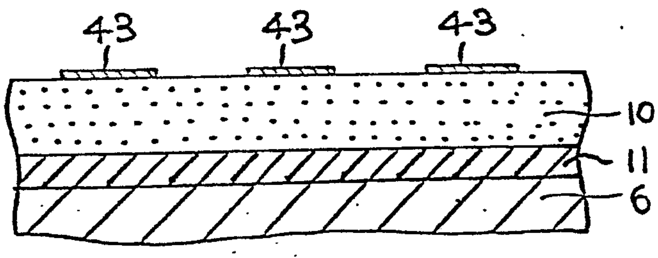


Fig. 17C

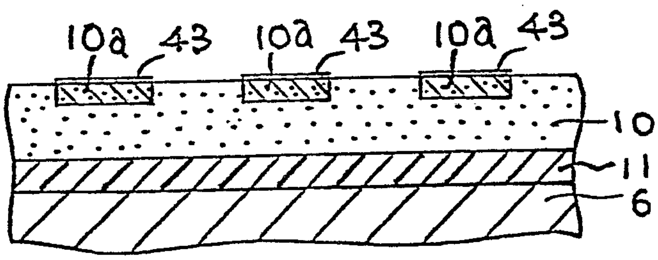


Fig. 18

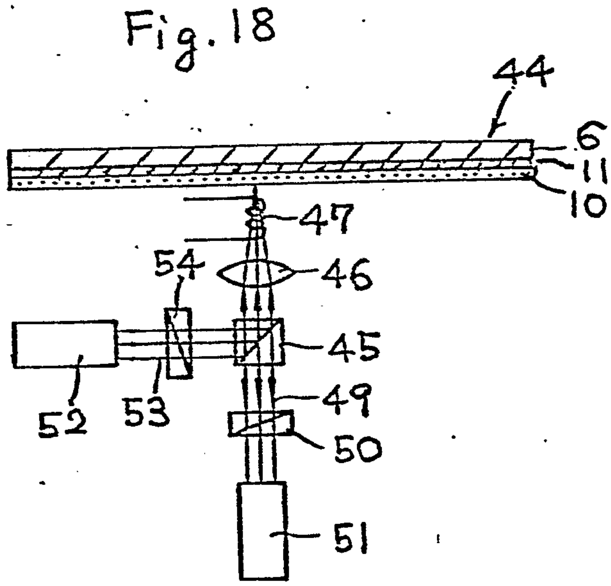

Fig. 19

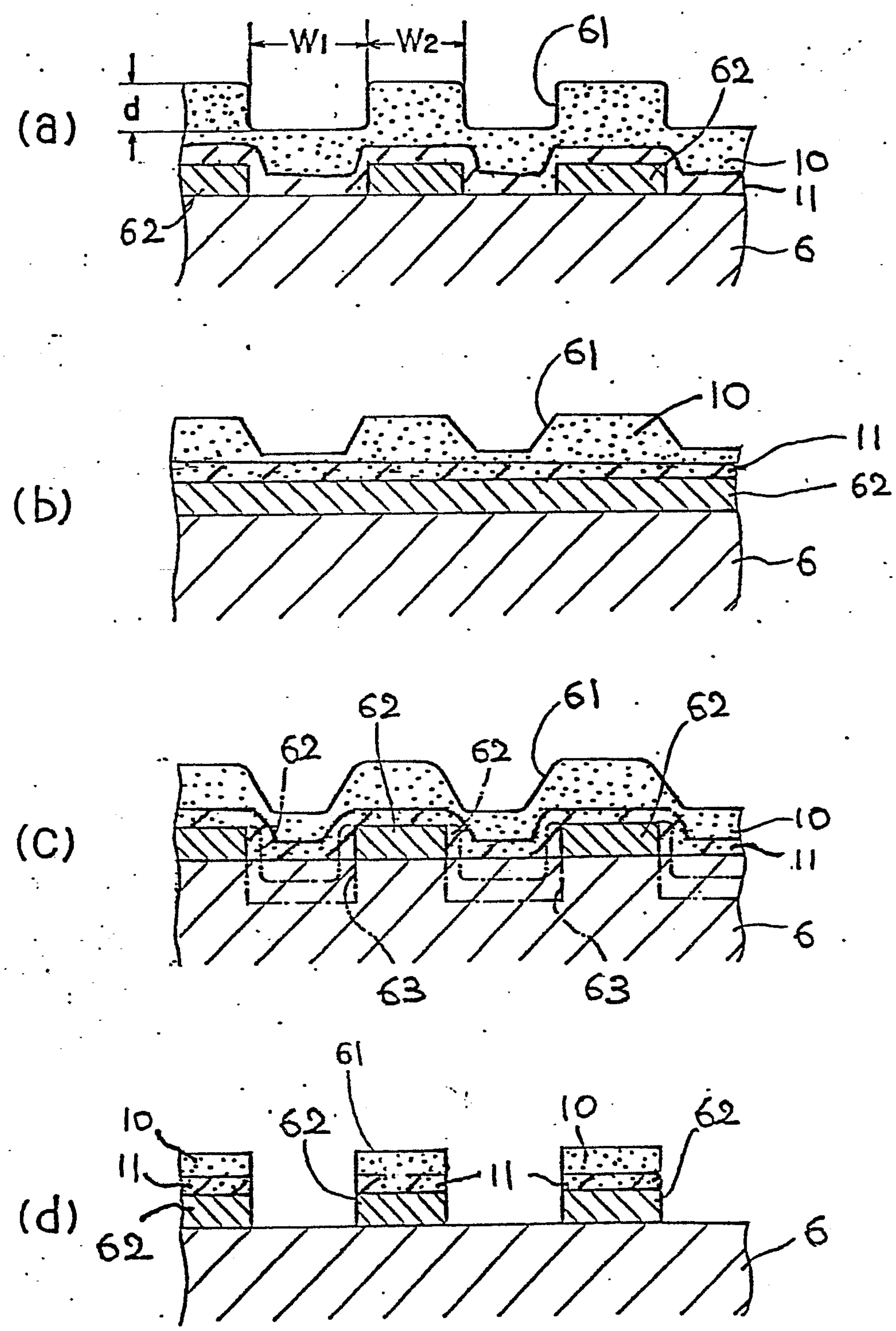

Fig. 20

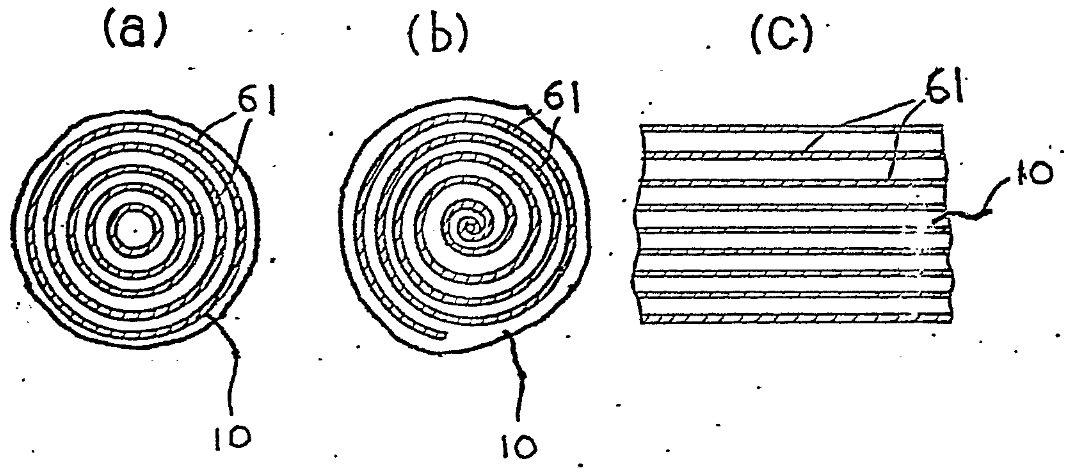
(a)
(b)
(C)
61
61
61
10
10
10

Fig. 21

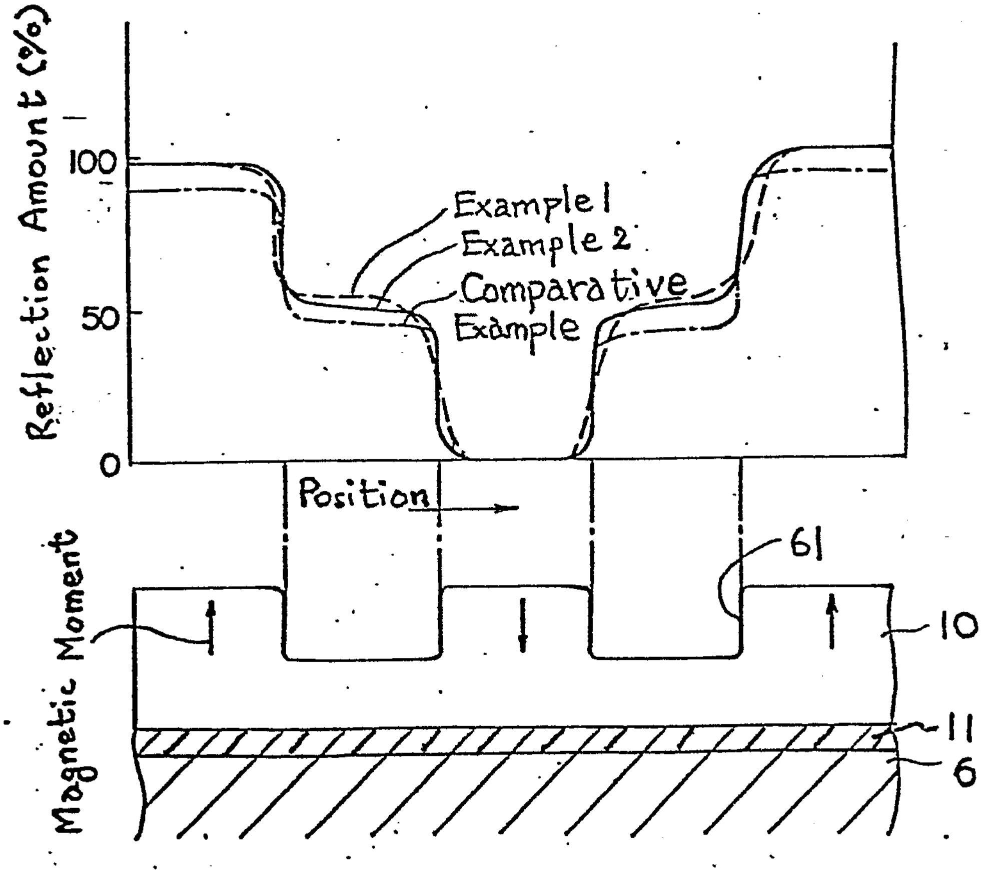
Reflection Amount (%)
100
50
0
Example 1
Example 2
Comparative Example
Position
Magnetic Moment
61
10
11
6

Fig. 22

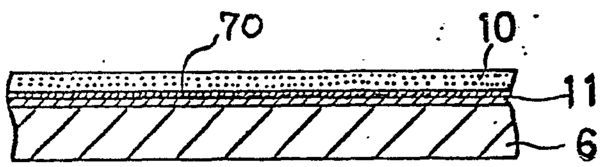
70
10
11
6

Fig. 23

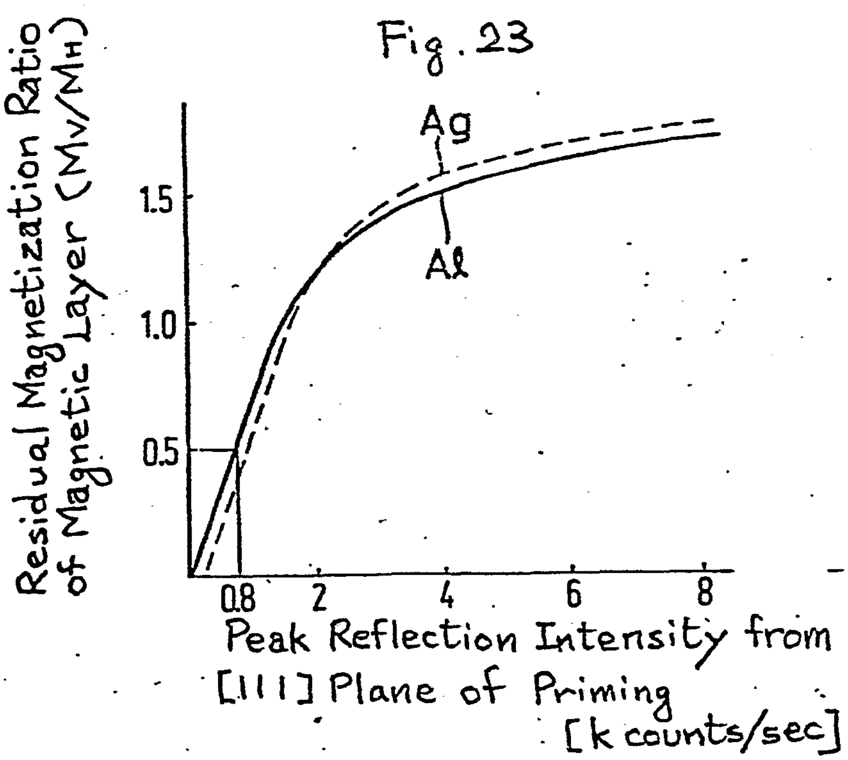
Residual Magnetization Ratio of Magnetic Layer (Mv/MH)
Ag
Al
1.5
1.0
0.5
0.8
2
4
6
8
Peak Reflection Intensity from [111] Plane of Priming [k counts/sec]

Fig. 24

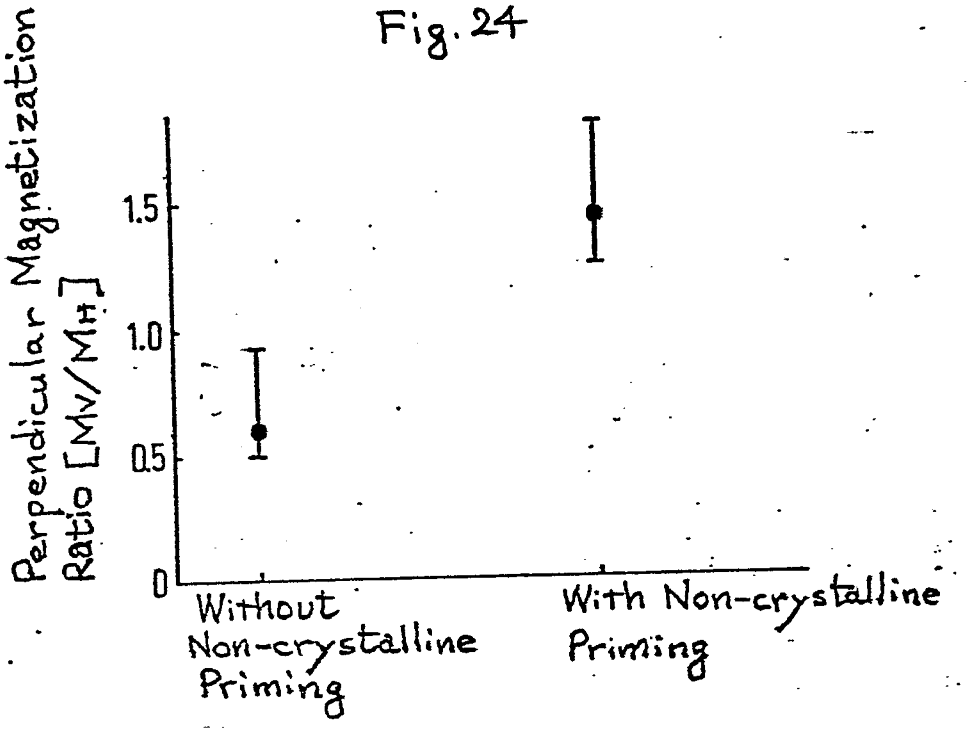
Perpendicular Magnetization Ratio [Mv/MH]
1.5
1.0
0.5
0
Without Non-crystalline Priming
With Non-crystalline Priming

Fig. 25

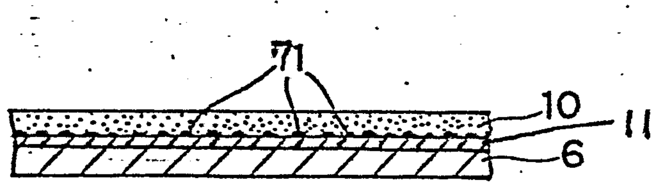
71
10
11
6

16/18

0169928

Fig. 26

(a)

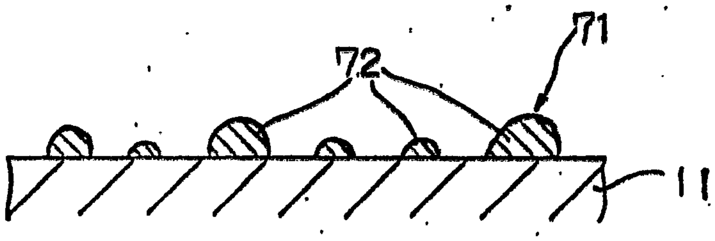


(b)

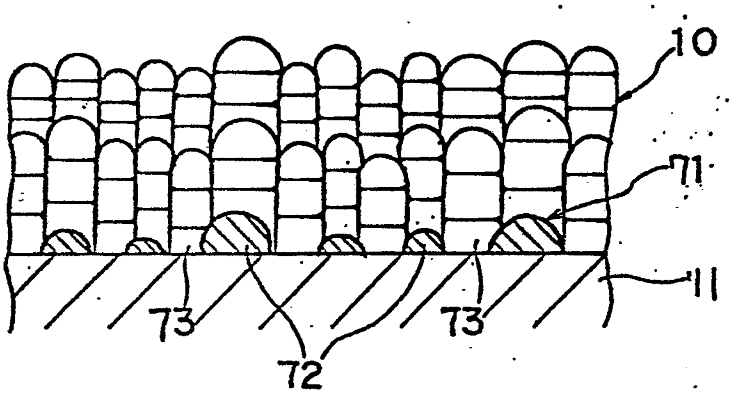


(C)

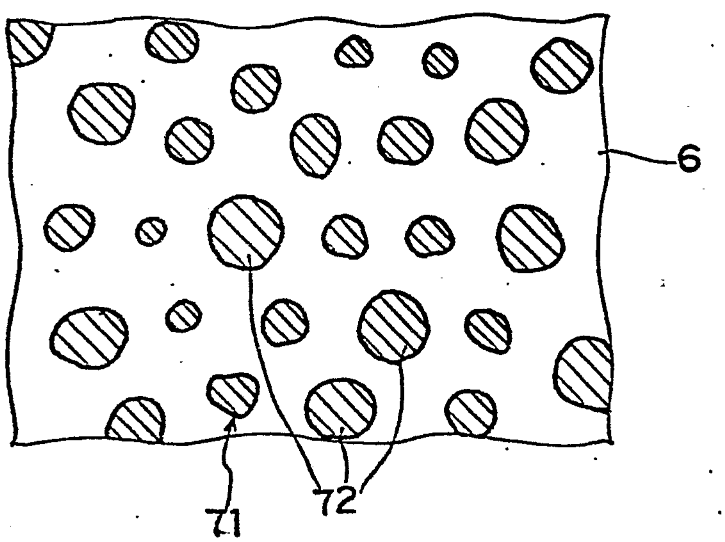

Fig. 27

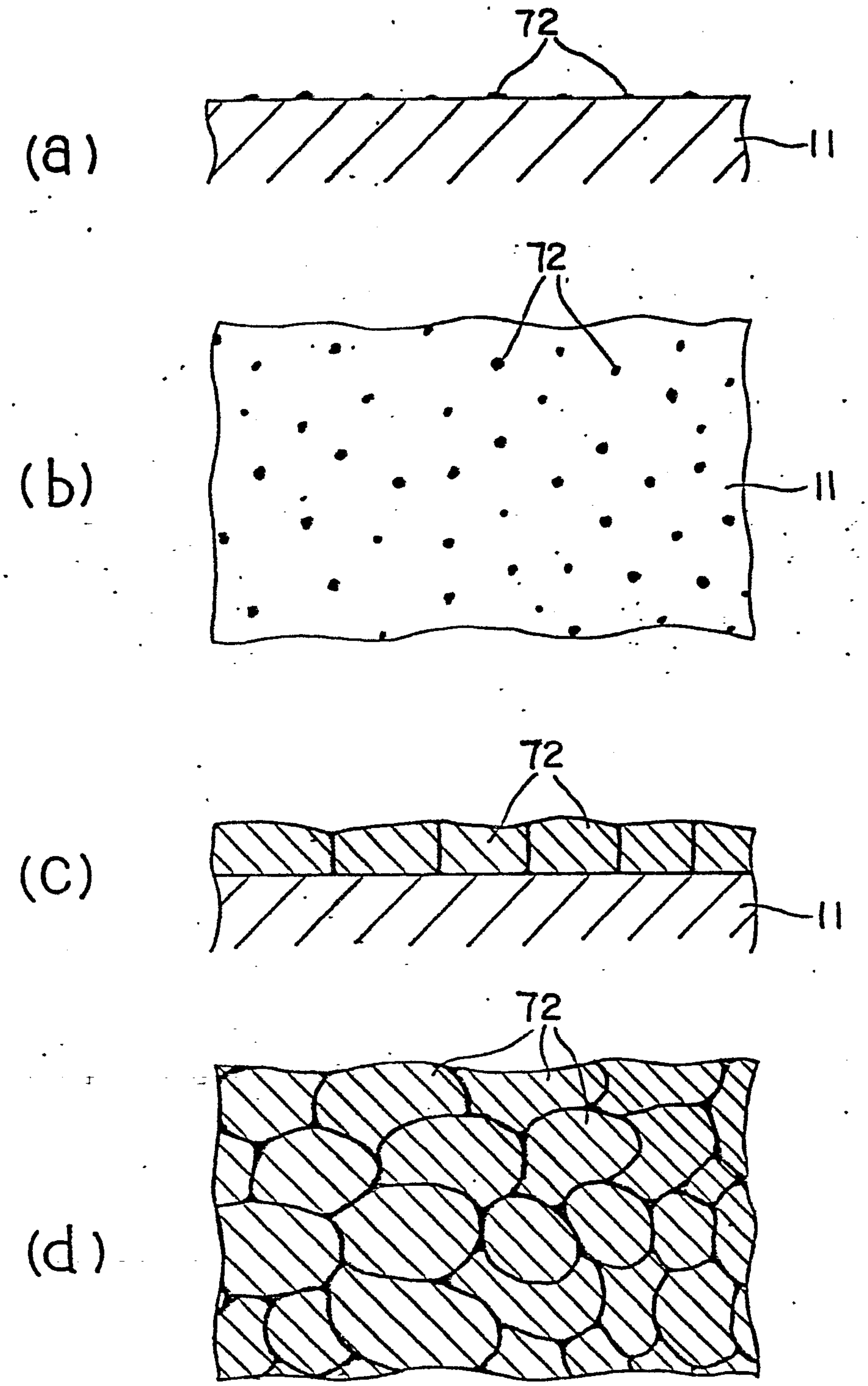

Fig. 28

(a)

(b)

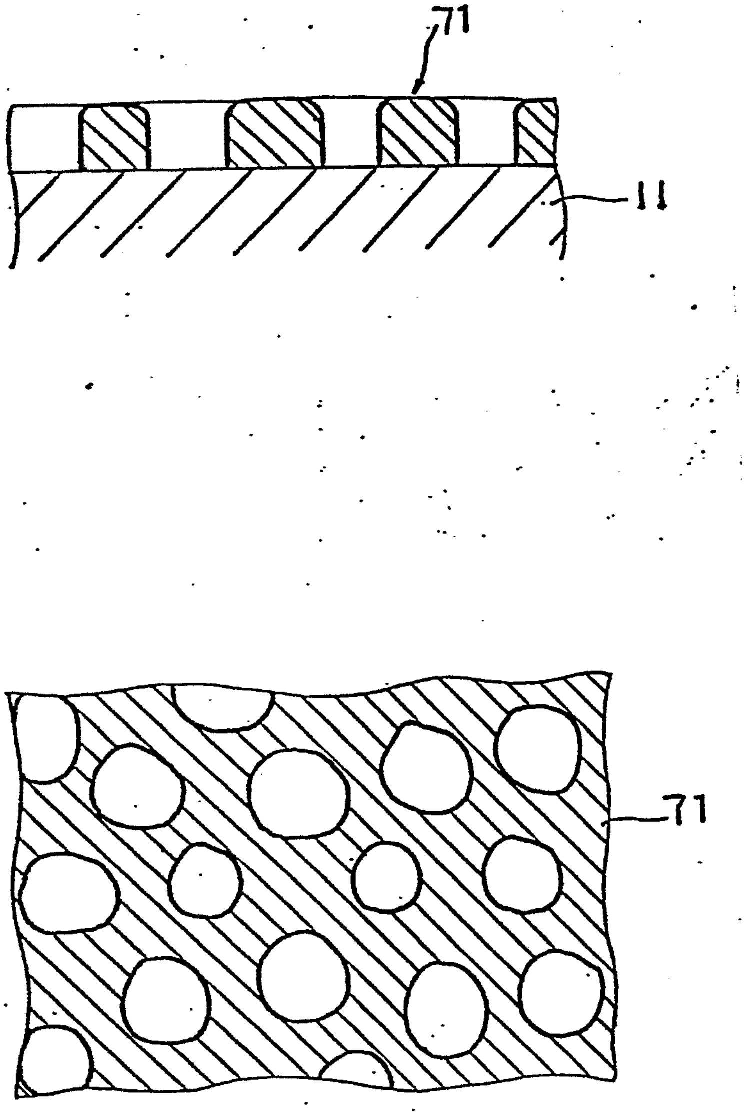

European Patent Office

# EUROPEAN SEARCH REPORT

0169928

Application number

EP 84 10 9190

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| E | EP-A-0 122 030 (NIHON SHINKU GIJUTSU K.K.) * Claims 1,3,5,18,19,24; figures 12,14; page 1, lines 9-14 * --- | 1-3,5 | G 11 B 5/66<br>G 11 B 5/64 |
| Y | PATENTS ABSTRACTS OF JAPAN, vol. 7, no. 51 (P-179)[1196], 26th February 1983; & JP - A - 57 198 535 (CANON K.K.) 06-12-1982 * Abstract * --- | 1 | |
| Y | JAPANESE JOURNAL OF APPLIED PHYSICS, vol. 23, no. 6, Part 2, June 1984, pages L397-L399, Tokyo, JP; K. NAKAMURA et al.: "A new perpendicular magnetic film of Co-O by evaporation" * Figure 3 * --- | 1 | TECHNICAL FIELDS SEARCHED (Int. Cl.4) |
| A | PATENTS ABSTRACTS OF JAPAN, vol. 7, no. 152 (P-208)[1297], 5th July 1983; & JP - A - 58 62824 (NIPPON DENKI K.K.) 14-04-1983 * Abstract * ----- | 1 | G 11 B |

The present search report has been drawn up for all claims

| Place of search | Date of completion of the search | Examiner |
|---|---|---|
| THE HAGUE | 02-04-1985 | VITZTHUM N.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82